# EUROPEAN PATENT APPLICATION

(11) **EP 4 755 717 A1**
(43) Date of publication of application: **10.06.2026**
(21) Application number: 24869885.4
(22) Date of filing: 21.06.2024
(51) Int. Cl.: B60R 1/22

(54) **ON-BOARD INTERACTIVE ASSISTED DRIVING METHOD, ON-BOARD ELECTRONIC DEVICE, AND STORAGE MEDIUM**

(30) Priority: 28.09.2023 CN 202311277885; 28.09.2023 CN 202322645328 U
(71) Applicant: Raytron Technology Co., Ltd., Yantai, Shandong 264006 (CN)
(72) Inventor: CHENG, Lianghui, Hefei, Anhui 230001 (CN); CHEN, Jie, Hefei, Anhui 230001 (CN); LIN, Jiamin, Hefei, Anhui 230001 (CN); LI, Xueqing, Hefei, Anhui 230001 (CN); SHI, Benyi, Hefei, Anhui 230001 (CN); HUANG, Xingming, Hefei, Anhui 230001 (CN)
(74) Representative: Reiser & Partner Patentanwälte mbB
(86) International application number: PCT/CN2024/100810
(87) International publication number: WO 2025/066325

(57) **Abstract**

Embodiments of the application provide an on-board interactive assisted driving method, an on-board electronic device and a storage medium. The on-board interactive assisted driving method includes: obtaining dual-light image data acquired by an on-board camera, wherein the dual-light image data includes infrared image data and visible-light image data; determining a local display mode of a host end, and on the basis of the dual-light image data, displaying, on a display interface of the host end, a target-type on-board video corresponding to the local display mode; and after a communication connection with an intelligent terminal is established, determining a terminal display mode of the intelligent terminal, obtaining, on the basis of the dual-light image data, a target-type video source corresponding to the terminal display mode, and sending the target-type video source to the intelligent terminal for display.

## Description

The invention claims priority to Chinese Patent Application No. 202311277885.5, entitled "ON-BOARD INTERACTIVE ASSISTED DRIVING METHOD, ON-BOARD ELECTRONIC DEVICE, AND STORAGE MEDIUM", filed to the China National Intellectual Property Administration on September 28, 2023, and Chinese Patent Application No. 202322645328.6, entitled "ON-BOARD ASSISTED DRIVING INSTRUMENT", filed to the China National Intellectual Property Administration on September 28, 2023, which are incorporated herein by reference in its entirety.

### FIELD

The application relates to the technical field of vehicle assisted driving, in particular to an on-board interactive assisted driving method, an on-board electronic device and a computer-readable storage medium.

### BACKGROUND

In recent years, with the continuous development of the society, the traffic condition has become increasingly complex. Considering the driving safety, the assisted driving technology has received more and more attention and application.

At night or in backlighting, densely foggy, rainy and snowy environments where the vision of drivers is obstructed, intuitive image display is desired to assist the drivers in identifying and determining dangerous objects ahead, so as to reduce the occurrence of dangers. Infrared images are insensitive to light, can penetrate through fog, and exhibit good characteristics in harsh weather conditions. However, the infrared images have a low resolution and lack rich texture and color information. Visible-light images have a high resolution and rich texture and color information, and wide-angle visible light can provide a larger field of view. Therefore, how to apply both infrared images and visible-light images to on-board assisted driving to improve driving safety has attracted growing attention.

In addition, the wide application of mobile electronic devices such as mobile phones and tablet computers has brought a lot of convenience to users, and the mobile electronic devices are often used by drivers during vehicle driving. For example, the drivers may use the navigation functions of maps in the mobile phones, the functions of various music APPs, etc. However, although the mobile electronic devices have been widely used in conjunction with on-board products, they can only provide independent additional functions or are simply kept synchronous with the on-board products to mirror the functions of some APPs on the mobile phones (such as the navigation function, the functions of music APPs) into an on-board system, and cannot expand or support the original functions of the on-board products, that is, neither the functions of the on-board products are optimized by the use of the mobile phones nor the functions of the mobile phones commonly used by drivers during driving are optimized by being connected to the on-board products.

### SUMMARY

### Technical Problems

In view of this, the application provides an on-board interactive assisted driving method, which applies both infrared images and visible-light images to on-board assisted driving based on interactive assisted control to improve driving safety, an on-board electronic device and a computer-readable storage medium.

### Technical Solution

In a first aspect, embodiments of the present application provide an on-board interactive assisted driving method for use in an on-board electronic device, comprising:
obtaining dual-light image data acquired by an on-board camera, wherein the dual-light image data comprises infrared image data and visible-light image data;
determining a local display mode of a host end, and on the basis of the dual-light image data, displaying a target-type on-board video corresponding to the local display mode on a display interface of the host end; and
after a communication connection with an intelligent terminal is established, determining a terminal display mode of the intelligent terminal, obtaining, on the basis of the dual-light image data, a target-type video source corresponding to the terminal display mode, and sending the target-type video source to the intelligent terminal for display.

In some embodiments, obtaining dual-light image data acquired by an on-board camera comprises:
selecting, according to a size of the infrared image data, an available image region of the same size from the visible-light image data as a target region, and superimposing the infrared image data onto the target region of the visible-light image data to form dual-light image data in a picture-in-picture mode; and
obtaining the dual-light image data from the on-board camera.

In some embodiments, selecting, according to a size of the infrared image data, an available image region of the same size from the visible-light image data as a target region comprises:
according to the size of the infrared image data, taking an image region, corresponding to a sky in a driving scenario, in the visible-light image data as the available image region, and selecting a region, a size of which is the same as the size of the infrared image data, as the target region, or selecting multiple regions, a total size of which is the same as the size of the infrared image data, as the target region.

In some embodiments, obtaining dual-light image data acquired by an on-board camera further comprises:
processing the dual-light image data in the picture-in-picture mode to divide the dual-light image data in the picture-in-picture mode into an infrared video signal and a visible-light video signal, and compressively encoding and storing the video signals;
sending the target-type video source to the intelligent terminal for display comprises:
   if the terminal display mode is an infrared mode, sending the infrared video signal to the intelligent terminal for display through a wired communication or a wireless communication with the intelligent terminal; or
   if the terminal display mode is a visible-light mode, sending the visible-light video signal to the intelligent terminal for display through a wired communication or a wireless communication with the intelligent terminal.

In some embodiments, the on-board interactive assisted driving method further comprises:
after the communication connection with the intelligent terminal is established, masquerading an identity of the host end as a master device and masquerading the intelligent terminal as a slave device by means of a fast charging protocol, and charging the intelligent terminal according to a charging demand of the intelligent terminal.

In some embodiments, the on-board interactive assisted driving method further comprises:
in a case where a GPS signal of the host end does not satisfy requirements, determining whether the communication connection with the intelligent terminal is established currently;
if the communication connection with the intelligent terminal is established currently, sending a GPS signal request to the intelligent terminal, receiving GPS data returned by the intelligent terminal, and enabling a speed warning mechanism based on the received GPS data; or,
if the communication connection with the intelligent terminal is not established currently or a GPS signal of the intelligent terminal is invalid, disabling the speed warning mechanism.

In some embodiments, determining a local display mode of a host end comprises:
determining the local display mode according to default settings of the host end; and/or, determining the local display mode by adaptive adjustment on the basis of real-time light intensity information and image information; and/or, determining the local display mode based on a mode selection operation performed on the host end; wherein the local display mode is an infrared mode, a visible-light mode or a simulation display mode;
determining a terminal display mode of the intelligent terminal comprises:
   determining the terminal display mode according to default settings of the intelligent terminal; and/or, determining the terminal display mode by adaptive adjustment on the basis of real-time light intensity information and image information; and/or, determining the terminal display mode based on a mode selection operation performed on the intelligent terminal; wherein the terminal display mode is an infrared mode or a visible-light mode.

In some embodiments, determining a local display mode of a host end comprises:
maintaining the local display mode of the host end as a simulation display mode;
determining a terminal display mode of the intelligent terminal comprises:
   acquiring real-time light intensity information, and determining whether a sufficient light condition is satisfied according to whether the light intensity information is greater than a threshold;
   if the sufficient light condition is satisfied, comparing a variance of the infrared image data with a Y-component variance of the visible-light image data;
   if the variance of the infrared image data is less than the Y-component variance of the visible-light image data, determining the terminal display mode of the intelligent terminal as a visible-light mode; or,
   if the sufficient light condition is not satisfied or the variance of the infrared image data is not less than the Y-component variance of the visible-light image data, determining the terminal display mode of the intelligent terminal as an infrared mode.

In some embodiments, the on-board interactive assisted driving method further comprises:
performing image analysis on the basis of the dual-light image data, and issuing warning information in the presence of a risk warning event, wherein the warning information comprises a warning sound or a simulated risk event image displayed on the display interface of the host end that corresponds to the risk warning event; and/or
after the communication connection with the intelligent terminal is established, receiving an upgrade data package issued by the intelligent terminal following an upgrade prompt, and performing a firmware upgrade using the upgrade data package; and/or
receiving a capturing instruction issued by the intelligent terminal, capturing an image or recording a video of a set duration by means of the on-board camera according to the capturing instruction, and sending the image or the video to the intelligent terminal for real-time display.

In a second embodiment, embodiments of the present application provide an on-board electronic device, comprising a host, wherein the host comprises a processor, a memory connected to the processor and a computer program stored in the memory and executable by the processor; and the computer program, when executed by the processor, implements the on-board interactive assisted driving method according to any one of the above embodiments.

In some embodiments, the host is mounted inside a vehicle, the on-board electronic device further comprises an on-board camera in communication connection with the host, and the on-board camera is mounted outside the vehicle and configured to acquire dual-light image data in real time and send the dual-light image data to the host; and a mounting structure for mounting an intelligent terminal is arranged on a housing of the host, or a clamping structure for clamping and fixing the intelligent terminal is arranged on the housing of the host.

In a third aspect, embodiments of the present application provide a computer-readable storage medium. The computer-readable storage medium stores a computer program thereon. The computer program, when executed by a processor, implements the on-board interactive assisted driving method according to any one of the above embodiments.

In a fourth aspect, embodiments of the present application provide an on-board electronic device, comprising a host main body and a mounting position arranged on the host main body for mounting an intelligent terminal device;
wherein the host main body comprises a controller connected to an on-board camera, a display screen and a charging module, the display screen is arranged on a side of the host main body, and the controller is configured to control the display screen to display an on-board image formed from image data acquired by the on-board camera;
wherein the host main body is configured to be in communication connection with the intelligent terminal device to implement data transmission between the host main body and the intelligent terminal device, so as to enable display of the on-board image on the intelligent terminal device, and the controller is configured to control the charging module to charge the intelligent terminal device according to a charging demand of the intelligent terminal device;
wherein the on-board camera is an on-board dual-light camera provided with a dual-light core module, the controller is in communication connection with the on-board dual-light camera and configured to generate on-board images of different types according to visible-light image data and infrared image data acquired by the on-board dual-light camera, and the types of the on-board images at least comprise an infrared on-board image and a visible-light on-board image; and the display screen of the host main body displays the on-board image of a first target type, the intelligent terminal device displays the on-board image of a second target type, and the first target type and the second target type are the same or different.

In some embodiments, a circuit board is arranged in the host main body, the controller and the charging module are both arranged on the circuit board, and the circuit board is configured to connect to an on-board power supply module for the circuit board to be powered by the on-board power supply module;
the charging module is a wireless charging module, and the wireless charging module comprises a wireless transmitter module arranged on the circuit board and configured to cooperate with a wireless receiver module in the intelligent terminal device; when the intelligent terminal device is placed in the mounting position, the wireless transmitter module cooperates with the wireless receiving module to wirelessly charge the intelligent terminal device; or, the charging module is a wired charging module, the wired charging module comprises a charging interface arranged on a housing of the host main body and configured to connect to the intelligent terminal device, the charging interface allowing the intelligent terminal device to be connected to the charging interface via a data cable, and the charging module is configured to charge the intelligent terminal device in a wired manner through the charging interface.

In some embodiments, a support member for supporting the intelligent terminal device is arranged on the host main body, a magnetic attraction member is arranged on the support member, and the magnetic attraction member provides a magnetic force for attracting the intelligent terminal device onto the support member.

In some embodiments, the charging module is a wireless charging module, the wireless charging module comprises a transmitting coil arranged in the support member and configured to be wirelessly connected to a receiving coil in the intelligent terminal device to realize wireless charging of the intelligent terminal device.

In some embodiments, the support member is rotatably connected to the host main body by means of a rotating member, a wire channel is formed in the rotating member, allowing for a wire connecting the transmitting coil to the controller of the host main body to pass through the wire channel.

In some embodiments, the support member is rotatable with respect to the host main body, defining a support state or a stowed state;
wherein when the support member rotates with respect to the host main body to the support state, the support member and the host main body collectively form the mounting position for mounting the intelligent terminal device; when the support member rotates with respect to the host main body to the stowed state, the support member is folded and stored onto the host main body.

In some embodiments, the host main body comprises a voice module, and the voice module is connected to the controller and configured to output an alarm signal.

In some embodiments, the host main body comprises a GPS positioning module and configured to acquire real-time speed and/or position information of a vehicle and send the real-time speed and/or position information of the vehicle to the controller.

In some embodiments, the host main body is in communication connection with the on-board camera by means of a GMSL interface and a coaxial cable.

### Beneficial Effects

According to the on-board interactive assisted driving method provided by the above embodiment, by establishing a communication connection between the host end and the intelligent terminal and by utilizing data interaction, dual-light image data acquired in the current driving scenario may be synchronously displayed in the same type or different types by the local display interface of the host end and the terminal display interface of the intelligent terminal. In this way, thanks to the development and popularization of various portable intelligent terminals, displaying the on-board video no longer merely relies on the display function of the host end of the on-board electronic device. Instead, by interconnecting the host end and the intelligent terminal and utilizing interactive assisted control between the host end and the intelligent terminal, a dual-screen display can be provided cooperatively by the host end and the intelligent terminal, which allows for the real-time display of a video data source adaptive to a corresponding scenario, facilitating driver observation, thus improving driving safety and greatly improving the convenience and practicability of the host end.

In the above embodiments, the on-board electronic device and the computer-readable storage medium are based on the same concept as the embodiments of the on-board interactive assisted driving method and have the same technical effects as the embodiments of the on-board interactive assisted driving method, which will not be repeated here.

Further, in the on-board electronic device, the host main body can send in real time the on-board image, formed from the image data acquired by the on-board camera, to the intelligent terminal device for display while displaying the on-board image on the local display screen. The host main body and the intelligent terminal can display the on-board videos of the same or different target types, respectively. In this way, thanks to the development and popularization of various portable intelligent terminals, displaying the on-board video no longer merely relies on the display function of the host main body of the on-board electronic device. Instead, dual-screen display is provided by utilizing data interaction between the host main body and the intelligent terminal, such that the on-board electronic device can display in real time a video data source adaptive to a scenario according to the condition of the scenario. For example, the dual-screen display of the host main body and the intelligent terminal enables the simultaneous use of an infrared image and a visible-light image in the on-board assisted driving, thus facilitating driver observation, improving driving safety and greatly improving the convenience and practicability of the host end. In addition, the charging module is integrated in the host main body. While the intelligent terminal device and the host main body maintain data interaction for the extended display of the on-board video, the charging module compensates for the power of the intelligent terminal device according to the charging demand of the intelligent terminal device, thus prolonging the endurance of the intelligent terminal device and improving the practicability of the on-board electronic device.

### BRIEF DESCRIPTION OF THE DRAWINGS

The above and/or other aspects and advantages of the application will be better clarified and easily understood with reference to the following embodiments described in conjunction with accompanying drawings. Wherein:
FIG. 1 is a schematic diagram of an application scenario for an on-board interactive assisted driving method according to one embodiment.
FIG. 2 is a flowchart of the on-board interactive assisted driving method according to one embodiment.
FIG. 3 is a schematic diagram showing the principle of forming dual-light image data in a picture-in-picture mode by infrared and visible-light image data according to an optional example.
FIG. 4 is a schematic diagram showing the principle of forming dual-light image data in a picture-in-picture mode by infrared and visible-light image data according to another optional example.
FIG. 5 is a flowchart of acquiring a GPS signal by a host according to an optional example.
FIG. 6 is a schematic diagram of a local display mode according to an optional example.
FIG. 7 is a schematic diagram of a terminal display mode according to an optional example.
FIG. 8 is a flowchart of determining, by a host, a local display mode and a terminal display mode by adaptive adjustment according to an optional example.
FIG. 9 is a system architecture diagram of the on-board interactive assisted driving method according to an optional example.
FIG. 10 is a flowchart of the on-board interactive assisted driving method according to an optional example.
FIG. 11 is a schematic structural diagram of an on-board electronic device according to one embodiment.
FIG. 12 is an overall structural diagram of an on-board assisted driving instrument according to one embodiment.
FIG. 13 is a schematic diagram of functional modules of the on-board assisted driving instrument according to one embodiment.
FIG. 14 is an exploded view of a transmitting coil mounted on a support member according to one embodiment.
FIG. 15 is a schematic diagram showing the principle of wireless charging of the on-board assisted driving instrument according to one embodiment.
FIG. 16 is an overall structural diagram of the on-board assisted driving instrument in a stowed state according to one embodiment.
FIG. 17 is a side view of an intelligent terminal device placed on the on-board assisted driving instrument.
FIG. 18 is a front view of the intelligent terminal device placed on the on-board assisted driving instrument.
FIG. 19 is an exploded view of the on-board assisted driving instrument.
FIG. 20 is a sectional view of FIG. 16.
FIG. 21 is another sectional view of FIG. 16.

Reference signs:
1, host main body; 11, controller; 111, display screen; 112, communication module; 113, charging module; 1131, transmitting coil; 114, voice module; 115, GPS positioning module; 116, decoder; 117, processor; 118, memory; 12, upper housing; 121, receiving space; 122, stop surface; 123, mounting surface; 13, lower housing; 14, first PCB; 141, first interface; 142, second interface; 15, second PCB; 151, data storage card slot; 16, first support plate; 17, second support plate; 18, stationary side plate; 19, rubber pad; 2, support member; 21, magnetic member; 22, upper shell; 23, lower shell; 3, rotating member; 31, rotating arm; 32, central shaft; 33, mounting base.

### DESCRIPTION OF THE EMBODIMENTS

The technical solutions of the application are expounded in further detail below in conjunction with accompanying drawings and specific embodiments.

To better clarify the purposes, technical solutions and advantages of the application, the application is described in further detail below in conjunction with accompanying drawings. The embodiments described below should not be construed as limitations of the application. All other embodiments obtained by those ordinarily skilled in the art without creative labor should also fall within the protection scope of the application.

The expression "some embodiments" involved in the following description indicates subsets of all possible embodiments. It should be noted that "some embodiments" may identical or different subsets of all possible embodiments and may be combined without conflicts.

The terms "first", "second" and "third" involved in the following description are merely for distinguishing similar objects and do not indicate specific sequences of objects referred to. It is understandable that specific sequences or precedence orders defined by "first", "second" and "third" may be exchanged where permitted, to allow the embodiments of the application described here to be implemented in other sequences different from those illustrated or described here.

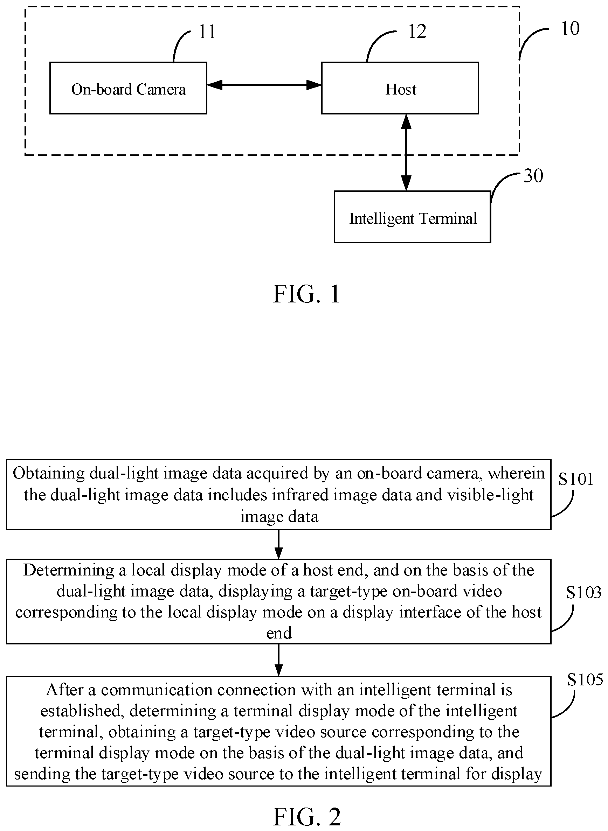

Referring to FIG. 1 which is a schematic diagram of an optional application scenario for an on-board interactive assisted driving method according to one embodiment of the application, an on-board electronic device 10 includes a host 12 arranged inside a vehicle and an on-board camera 11 mounted outside the vehicle. The host 12 is in communication connection with the on-board camera 11, and the on-board camera 11 is configured to acquire in real time dual-light image data for corresponding imaging of a driving scenario when the vehicle is traveling and send the dual-light image data to the host 12. The host 12 is provided with a display screen and is able to establish a communication connection with an intelligent terminal 30. When a driver uses the on-board electronic device 10 for assisted driving, the driver can connect his or her daily intelligent terminal 30 to the host 12 through a communication connection. The host 12 receives dual-light image data from the on-board camera 11, processes the dual-light image data and divides the dual-light image data into an infrared video signal and a visible-light video signal. Based on the driver's requirement for viewing an infrared on-board video or a visible-light on-board video, the driver is allowed to choose to display the infrared on-board video and the visible-light on-board video on a local display interface of the host 12 and a terminal display interface of the intelligent terminal 30, respectively. This facilitates the driver using the daily intelligent terminal 30 in conjunction with the host 12 to display different types of on-board videos, such that infrared and visible-light images may be easily and synchronously used in on-board assisted driving when needed, thereby improving driving safety performance.

Referring to FIG. 2 which illustrates the on-board interactive assisted driving method according to one embodiment of the application, the on-board interactive assisted driving method may be applied to the host of the on-board electronic device in the application scenario shown in FIG. 1. The on-board interactive assisted driving method includes the following steps:
S101, obtaining dual-light image data acquired by an on-board camera, wherein the dual-light image data includes infrared image data and visible-light image data.

The on-board camera is mounted outside a vehicle, acquires in real time image data of a driving scenario when the vehicle is traveling, and sends the image data to the host. The on-board camera may be a dual-light on-board camera formed by a visible-light camera and an infrared camera, and may synchronously acquire visible-light image data and infrared image data corresponding to the driving scenario when the vehicle is traveling.

S103, determining a local display mode of a host end, and on the basis of the dual-light image data, displaying a target-type on-board video corresponding to the local display mode on a display interface of the host end.

The host is provided with a display screen. The local display mode is a mode in which the host displays an on-board video through its own display screen. The local display mode may be preset, and in different local display modes, on-board videos of different types are correspondingly displayed on the display interface. The available range of the types of the on-board videos is determined by the types of on-board videos that can be obtained, either solely or in combination, from different types of image data acquired by the on-board camera by imaging of different wave bands of light. For example, in a case where the dual-light image data includes the infrared image data and the visible-light image data, the local display modes of the host may include a visible-light display mode for displaying a visible-light on-board video, an infrared mode for displaying an infrared on-board video, and a simulation display mode for displaying a virtual simulated on-board video generated through simulation by an advanced driver assistance system (ADAS) based on image data of the current driving scenario. The target-type on-board video may be one of the visible-light on-board video, the infrared on-board video, and the virtual simulated on-board video.

S105, after a communication connection with an intelligent terminal is established, determining a terminal display mode of the intelligent terminal, obtaining a target-type video source corresponding to the terminal display mode on the basis of the dual-light image data, and sending the target-type video source to the intelligent terminal for display.

The intelligent terminal generally refers to one of various portable intelligent devices daily carried by users, such as a smart phone, a tablet personal computer, and the like. The terminal display mode refers to a mode in which an on-board video is displayed by a display screen of the intelligent terminal. The terminal display mode may be preset, and in different terminal display modes, on-board videos of different types are displayed on the display interface of the intelligent terminal. For example, in a case where the dual-light image data includes the infrared image data and the visible-light image data, the terminal display mode of the intelligent terminal may be a visible-light display mode for displaying a visible-light on-board video or an infrared mode for displaying an infrared on-board video. The target-type video source correspondingly refers to an infrared video signal or a visible-light video signal. Before driving the vehicle, a user can establish a communication connection between the intelligent terminal carried by the user and the host. After obtaining the dual-light image data that is acquired by the on-board camera, the host processes the dual-light image data, and sends the target-type video source, corresponding to the terminal display mode, to the intelligent terminal for display while simultaneously displaying the target-type on-board video corresponding to the local display mode on the local display interface. As such, the user may set dual-screen display of the host and the intelligent terminal according to the requirement for viewing the on-board video, so as to achieve clear display of the image data for the current driving scenario when driving in various conditions such as at night or in backlighting, densely foggy, rainy, or snowy weather.

According to the on-board interactive assisted driving method provided by the above embodiment, by establishing a communication connection between the host end and the intelligent terminal and by utilizing data interaction, dual-light image data acquired in the current driving scenario may be synchronously displayed in the same type or different types by the local display interface of the host end and the terminal display interface of the intelligent terminal. In this way, thanks to the development and popularization of various portable intelligent terminals, the display of an on-board video no longer merely relies on the display function of the host end of the on-board electronic device. Instead, by interconnecting the host end and the intelligent terminal and utilizing interactive assisted control between the host end and the intelligent terminal, a dual-screen display can be provided cooperatively by the host end and the intelligent terminal, which allows for the real-time display of a video data source adaptive to a corresponding scenario, facilitating driver observation, thus improving driving safety and greatly improving the convenience and practicability of the host end. The technical concept of interactive assisted control between the host and the intelligent terminal breaks through the conventional technical concept in the technical field of driving that an intelligent terminal is connected mainly to provide independent additional functions. The intelligent terminal may be used as a module for expanding the function of the host to optimize the assisted driving function of the host, and an integrated on-board system with expandable functions can be achieved by fully using the intelligence and display screen of the intelligent terminal. For example, when both the infrared image and visible-light image need to be used in on-board assisted driving, the intelligent terminal and the host can cooperatively form, through interactive assisted control, the integrated on-board system with dual-screen display to respectively display an infrared on-board video and a visible-light on-board video, such that the host can achieve a more powerful assisted driving function due to the integration with the intelligent terminal.

In some embodiments, obtaining dual-light image data acquired by an on-board camera in S101 includes:
selecting, according to a size of the infrared image data, an available image region of the same size from the visible-light image data as a target region, and superimposing the infrared image data onto the target region of the visible-light image data to form dual-light image data in a picture-in-picture mode; and
obtaining the dual-light image data from the on-board camera.

The resolution of a corresponding infrared detector for imaging of the infrared image data is generally lower than the imaging resolution of the visible-light image data. In addition, in the field of vehicle assisted driving, an upper portion of image data of the driving scenario corresponds generally to a sky image region with limited effective information. The sky image region with limited effective information in the visible-light image data can be considered as an available image region. Based on the size of the infrared image data, an available image region of the same size is selected from the visible-light image data as the target region, and the infrared image data is superimposed onto the target region of the visible-light image data, such that the infrared image data and the visible-light image data are combined to form the dual-light image data in the picture-in-picture mode.

In the above embodiment, the infrared image data and the visible-light image data acquired by the on-board camera are combined to form the dual-light image data in the picture-in-picture mode. Transmitting the dual-light image data between the host end and the on-board camera in the picture-in-picture mode helps simplify the hardware architecture and cable arrangement, thus improving the transmission efficiency. For example, the host may be connected to the on-board camera by means of a coaxial cable and acquire the dual-light image data by means of a gigabit multimedia serial links (GMSL) interface. In one optional example, the hardware architecture and cable connection between the host and the on-board camera may be the same as those of a typical scheme in the field of on-board assisted driving where only a visible-light camera is employed to acquire visible-light image data. This approach allows for retaining the original installation position and installation method of the on-board camera as well as the original connection between the on-board camera and an on-board assisted driving device, and only the on-board camera and the host need to be upgraded and replaced correspondingly, thereby facilitating users in upgrading their original vehicle, and promoting the wide application of the on-board interactive assisted driving method.

In some embodiments, selecting, according to a size of the infrared image data, an available image region of the same size from the visible-light image data as a target region includes:
according to the size of the infrared image data, taking an image region, corresponding to a sky in a driving scenario, in the visible-light image data as the available image region, and selecting a region, a size of which is the same as the size of the infrared image data, as the target region, or selecting multiple regions, a total size of which is the same as the size of the infrared image data, as the target region.

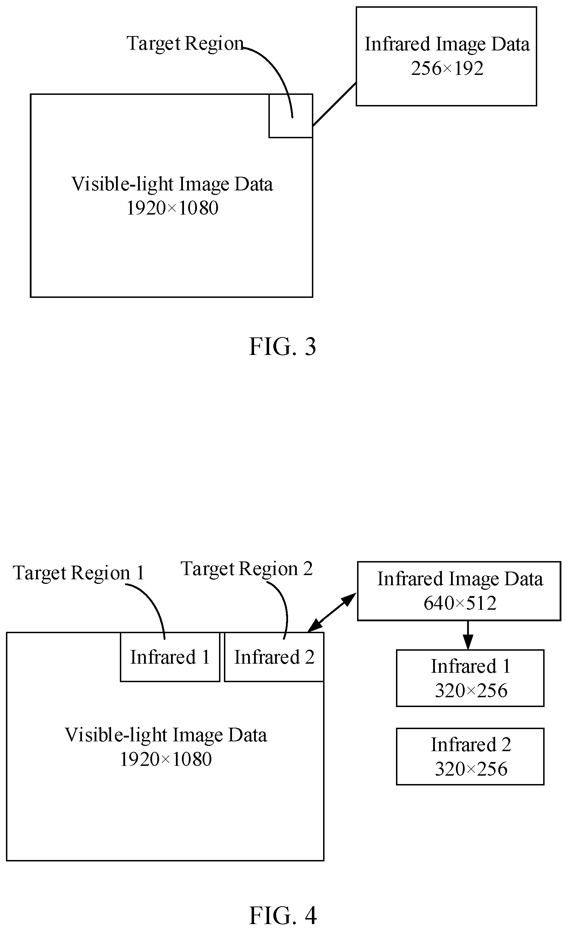

In the process of combining the infrared image data and the visible-light image data to form the dual-light image data in the picture-in-picture mode, the infrared image data may be superimposed onto the visible-light image data as a whole or in segmented blocks, depending on the size of the infrared image data. An image region corresponding to a sky portion in the visible-light image data is typically of a narrow, approximately rectangular shape, the imaging resolution of a corresponding infrared detector for imaging of the infrared image data is primarily available in two specifications: 256×192 and 640×512, and the resolution of a detector for visible-light imaging is mainly 1920×1080. As such, referring to FIG. 3, for an infrared image with a size of 256×192, a target region with the size of 256×192 may be directly selected from an upper half of the image of the visible-light image data, and the infrared image data is directly superimposed onto the target region of the visible-light image data. Referring to FIG. 4, for an infrared image with a size of 640×512, the infrared image may be divided into image blocks by rows, multiple regions respectively corresponding to the infrared image blocks are selected from the upper half of the image of the visible-light image data, and the infrared image blocks are respectively superimposed onto the corresponding multiple regions of the visible-light image data.

In some embodiments, obtaining dual-light image data acquired by an on-board camera in S101 further includes:
processing the dual-light image data in the picture-in-picture mode to divide the dual-light image data in the picture-in-picture mode into an infrared video signal and a visible-light video signal, and compressively encoding and storing the video signals;
sending the target-type video source to the intelligent terminal for display includes:
   if the terminal display mode is an infrared mode, sending the infrared video signal to the intelligent terminal for display via a wired communication or a wireless communication with the intelligent terminal; or
   if the terminal display mode is a visible-light mode, sending the visible-light video signal to the intelligent terminal for display via a wired communication or a wireless communication with the intelligent terminal.

The on-board camera acquires in real time the infrared image data and the visible-light image data of the driving scenario of the vehicle, forming a video stream of the dual-light image data in the picture-in-picture mode that is transmitted to the host. The host processes the video stream received and divides the dual-light image data in the picture-in-picture mode into the infrared video signal and the visible-light video signal. The host compressively encodes and stores the video signals. Specifically, this may involve compressing and encoding the video signals using the H.264 standard, and automatically and cyclically storing the video data in segmented files in a storage card, with each segment having a preset duration, such as 5 minutes. The host sends the target-type video source to the intelligent terminal according to the current terminal display mode of the intelligent terminal. If the terminal display mode of the intelligent terminal is an infrared mode, the host only sends the infrared video signal to the intelligent terminal for display. If the terminal display mode of the intelligent terminal is a visible-light mode, the host only sends the visible-light signal to the intelligent terminal for display. In this way, the efficiency of data transmission between the host and the intelligent terminal is improved, and the amount of further processing of the image data received from the host by the intelligent terminal is reduced.

In some embodiments, the on-board interactive assisted driving method further includes:
after the communication connection with the intelligent terminal is established, masquerading an identity of the host end as a master device and masquerading the intelligent terminal as a slave device by means of a fast charging protocol, and charging the intelligent terminal according to a charging demand of the intelligent terminal.

Under certain circumstances, a user may drive the vehicle for a long cumulative time in one day, and since video display of the intelligent terminal generally consumes a large amount of power, the endurance of the intelligent terminal will directly affect the usable time of the on-board interactive assisted driving function. A communication connection is established between the intelligent terminal and the host. By default, upon establishment of the communication connection, the intelligent terminal serves as the master device, the host serves as a slave device, and data interaction between the mater device and the slave device involves the intelligent terminal acquiring video data from the host end. To address the challenge of charging and extending the endurance of the intelligent terminal, a fast charging protocol chip is arranged at the host end, and the identity of the host end and the identity of the intelligent terminal are masqueraded by means of the fast charging protocol. For example, the fast charging protocol may masquerade the identity of the host end as the master device and masquerade the identity of the intelligent terminal as the slave device by modifying identify information of identity ports at two ends of a charging data cable, such that the host may charge the intelligent terminal while maintaining data interaction with the intelligent terminal. Guaranteeing the endurance of the intelligent device can improve the practicability of the on-board interactive assisted driving method.

In one optional example, a wired communication connection is established between the host end and the intelligent terminal by means of a data cable provided with a Type-C interface, and the intelligent terminal, serving as the master device, performs normal video data interaction and communication with the host. The host modifies the identities of the master device and the slave device indicated by ID pins in the Type-C interface by means of the fast charging protocol chip. This modification causes the host to be recognized as a master device and the intelligent terminal to be recognized as a slave device, which allows the host to automatically charge the intelligent terminal by means of the Type-C interface without affecting data interaction and communication.

In some embodiments, the on-board interactive assisted driving method further includes:
in a case where a GPS signal of the host end does not satisfy requirements, determining whether the communication connection with the intelligent terminal is established currently;
if the communication connection with the intelligent terminal is established currently, sending a GPS signal request to the intelligent terminal, receiving GPS data returned from the intelligent terminal, and enabling a speed warning mechanism based on the received GPS data; or,
if the communication connection with the intelligent terminal is not established currently or a GPS signal of the intelligent terminal is invalid, disabling the speed warning mechanism.

When the vehicle is traveling, there may be some complex road sections where GPS signals cannot be accurately acquired, such as tunnels and overpasses. The speed warning mechanism gives various alarms such as forward collision warning (FCW), lane departure warning (LDW), pedestrian collision warning (PCW) and forward vehicle start alert according to the speed conditions, and a false alarm may be easily triggered in the absence of speed data, thus compromising driving safety. Because the intelligent terminal is typically provided with a GPS module and a communication network adopted by the intelligent terminal includes a large number of base stations, the intelligent terminal can continuously acquire valid GPS signals in most cases.

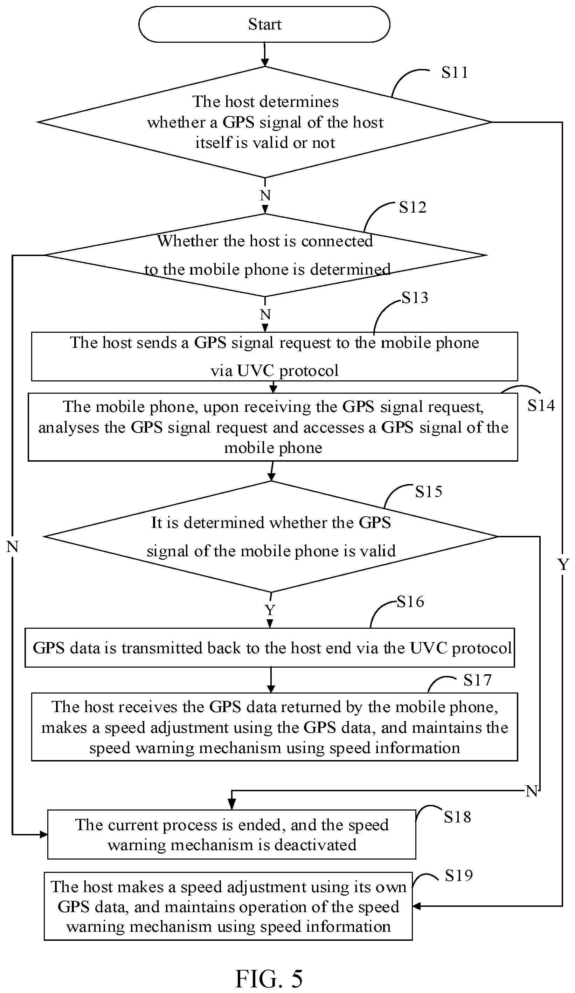

In one example, referring to FIG. 5, taking a mobile phone as an example of the intelligent terminal, the process of acquiring a GPS signal by the host end includes:
S11, the host determines whether a GPS signal of the host itself is valid or not; if the GPS signal of the host is invalid, the process proceeds to S12; or, if the GPS signal is valid, the process proceeds to S19.
S12, whether the host is connected to the mobile phone is determined; if the host is connected to the mobile phone, the process proceeds to S13; or, if the host is not connected to the mobile phone, the process proceeds to S18.
S13, the host sends a GPS signal request to the mobile phone via a USB Video Class (UVC) protocol, wherein the UVC protocol is a protocol standard defined for video transmission based on USB.
S14, the mobile phone, upon receiving the GPS signal request, analyses the GPS signal request and accesses a GPS signal of the mobile phone.
S15, it is determined whether the GPS signal of the mobile phone is valid; if the GPS signal of the mobile phone is valid, the process proceeds to S16.
S16, GPS data is transmitted back to the host end via the UVC protocol, wherein the GPS data includes information such as longitude, latitude, speed, time, and altitude; or, if the GPS signal of the mobile phone is invalid, a request failure message is returned to the host end, and after the host receives the request failure message, the process proceeds to S18.
S17, the host receives the GPS data returned by the mobile phone, makes a speed adjustment using the GPS data, and maintains the speed warning mechanism using speed information.
S18, the current process is ended, and the speed warning mechanism is deactivated.
S19, the host makes a speed adjustment using its own GPS data, and maintains operation of the speed warning mechanism using speed information.

In this embodiment, the host determines in real time whether a valid GPS signal is acquired; if the current GPS signal does not satisfy requirements, the host determines whether a communication connection has been established with the intelligent terminal, and requests a GPS signal from the intelligent terminal, and determines whether to currently maintain or deactivate the speed warning mechanism based on whether a valid GPS signal can be provided by the intelligent terminal. When the GPS signal of the host does not satisfy requirements, acquiring a GPS signal from the intelligent terminal for speed warning facilitates reducing false alarms.

In some embodiments, determining a local display mode of a host end includes:
determining the local display mode according to a default setting of the host end; and/or, determining the local display mode by adaptive adjustment on the basis of real-time light intensity information and image information; and/or, determining the local display mode based on a mode selection operation performed on the host end; wherein the local display mode is an infrared mode, a visible-light mode or a simulation display mode;
determining a terminal display mode of the intelligent terminal includes:
   determining the terminal display mode according to a default setting of the intelligent terminal; and/or, determining the terminal display mode by adaptive adjustment on the basis of real-time light intensity information and image information; and/or, determining the terminal display mode based on a mode selection operation performed on the intelligent terminal; wherein the terminal display mode is an infrared mode or a visible-light mode.

The mode of the host for displaying the on-board video and the mode of the intelligent terminal for displaying the on-board video may be determined using different methods. That is, determination of the local display mode of the host and the terminal display mode of the intelligent terminal may include various options: first, determination according to the default setting, where the local display mode of the host is generally set as an infrared mode and the terminal display mode of the intelligent terminal is generally set as a visible-light mode by default; second, determination by adaptive adjustment, which generally refers to that the local display mode of the host and the terminal display mode of the intelligent terminal can be intelligently determined by the host based on real-time light intensity information and image information; third, determination based on a user's manual mode selection operation, where, for example, the user may select the local display mode of the host end and the terminal display mode of the intelligent terminal via mode selection buttons provided on the display interface.

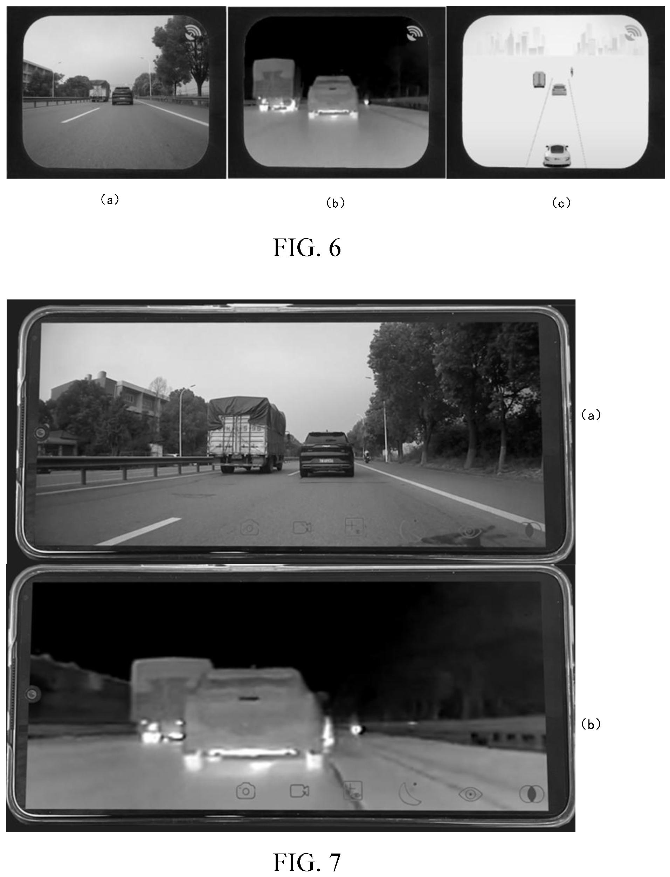

Referring to Table 1 and FIGS. 6 and 7, optional combinations of the local display mode and the terminal display mode are illustrated:

**Table 1**

| Display device | Mode | Type of on-board video |
|---|---|---|
| Host end (local display mode) | Simulation display mode | Virtual simulated on-board video (as shown by (c) in FIG. 6) |
| | Infrared mode | Infrared on-board video (as shown by (b) in FIG. 6) |
| | Visible-light mode | Visible-light on-board video (as shown by (a) in FIG. 6) |
| Intelligent | Infrared mode | Infrared on-board video (as shown by (b) in |
| terminal (terminal display mode) | | FIG. 7) |
| | Visible-light mode | Visible-light on-board video (as shown by (a) in FIG. 6) |

It should be noted that all the above options can be provided in determining the local display mode of the host end and the terminal display mode of the intelligent terminal. The mode selection operation typically has the highest priority; in a case where the user has not enabled the adaptive adjustment, the host respectively determines the current local display mode of the host end and the current terminal display mode of the intelligent terminal according to the default setting, but prioritizes any user's mode selection operation received thereafter. In a case where the user has enabled the adaptive adjustment, the host respectively determines the current local display mode of the host end and the current terminal display mode of the intelligent terminal by adaptive adjustment, but prioritizes any user's mode selection operation received thereafter.

In some embodiments, determining a local display mode of a host end includes:
maintaining the local display mode of the host end as a simulation display mode;
determining a terminal display mode of the intelligent terminal includes:
acquiring real-time light intensity information, and determining whether a sufficient light condition is satisfied according to whether the light intensity information is greater than a threshold;
if the sufficient light condition is satisfied, comparing a variance of the infrared image data with a Y-component variance of the visible-light image data;
if the variance of the infrared image data is less than the Y-component variance of the visible-light image data, determining the terminal display mode of the intelligent terminal as the visible-light mode; or,
if the sufficient light condition is not satisfied or the variance of the infrared image data is not less than the Y-component variance of the visible-light image data, determining the terminal display mode of the intelligent terminal as the infrared mode.

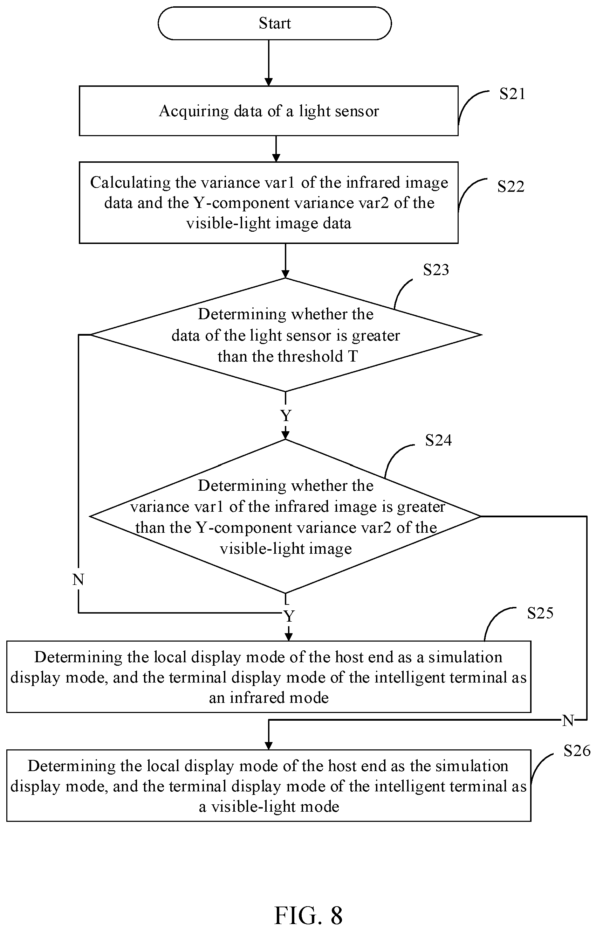

As shown in Table 2 and FIG. 8, this embodiment provides an example of displaying corresponding contents in the display interface of the host end and the display interface of the intelligent terminal by automatic mode selection based on adaptive adjustment.

**Table 2:**

| State | Light sensor | Comparison of image information contents | Mode |
|---|---|---|---|
| State 1 | Greater than threshold T | Variance of infrared image data>Y-component variance of visible-light image data | The host displays a virtual simulated on-board video, and the intelligent terminal displays an infrared on-board video |
| State 2 | Greater than threshold T | Variance of infrared image data<Y-component variance of visible-light image data | The host displays a virtual simulated on-board video, and the intelligent terminal displays a visible-light on-board video |
| State 3 | Less than threshold T | / | The host displays a virtual simulated on-board video, and the intelligent terminal displays an infrared on-board video |

The process of determining the local display mode and the terminal display mode by adaptive adjustment includes:
S21, acquiring data of a light sensor; setting a threshold T according to the data of the light sensor, determining whether light is intense or dim according to the threshold T; if the data is greater than the threshold T, determining that the light is intense; or, if the data is less than the threshold T, determining that the light is dim.
S22, calculating the variance var1 of the infrared image data and the Y-component variance var2 of the visible-light image data, the variance var1 and variance var2 being used to compare the image information contents.
S23, determining whether the data of the light sensor is greater than the threshold T; if the data of the light sensor is not greater than T, the process proceeds to S25; or, if the data of the light sensor is greater than the threshold T, the process proceeds to S24.
S24, determining whether the variance var1 of the infrared image is greater than the Y-component variance var2 of the visible-light image; if the variance var1 of the infrared image is greater than the Y-component variance var2 of the visible-light image, the process proceeds to S25; or, if the variance var1 of the infrared image is not greater than the Y-component variance var2 of the visible-light image, the process proceeds to S26.
S25, determining the local display mode of the host end as a simulation display mode, and the terminal display mode of the intelligent terminal as an infrared mode.
S26, determining the local display mode of the host end as the simulation display mode, and the terminal display mode of the intelligent terminal as a visible-light mode.

The host end may be provided with the light sensor to acquire light intensity information of the current environment in real time. Based on the acquired light intensity information in combination with the comparison of image information contents between the infrared imaged data and the visible-light image data in the acquired real-time dual-light image data, the video display mode of the host end and the video display mode of the intelligent terminal can be determined. Further, when the user switches the video display mode of the host end or the intelligent terminal by means of a manual operation, the switching is executed according to the user's manual selection operation, which takes precedence.

In some embodiment, the on-board interactive assisted driving method further includes:
performing image analysis on the basis of the dual-light image data, and issuing warning information in the presence of a risk warning event, wherein the warning information includes a warning sound or a simulated risk event image displayed on the display interface of the host end that corresponds to the risk warning event; and/or
after the communication connection with the intelligent terminal is established, receiving an upgrade data package sent by the intelligent terminal following an upgrade prompt, and performing a firmware upgrade using the upgrade data package; and/or
receiving a capturing instruction issued by the intelligent terminal, capturing an image or recording a video of a set duration by means of the on-board camera according to the capturing instruction, and sending the image or the video to the intelligent terminal for real-time display.

After performing image analysis on the basis of the dual-light image data acquired in real time by the on-board camera to determine the risk warning event, the host can generate a corresponding simulated risk event image according to the currently determined risk warning event and display it on the display interface of the host end, thereby providing an improved risk warning effect. The host end can utilize ADAS simulation to generate the corresponding simulated risk event image based on image data of the current driving scenario and the type of the determined risk warning event. For example, if the risk warning event is a potential forward collision, the distance and relative speed between the current vehicle and a preceding vehicle are determined by image data analysis to predict a scene of collision with the preceding vehicle, and an image of the collision scene is generated by ADAS simulation and displayed on the display interface of the host end to fulfil a risk warning effect. This helps the user realize the potential risk, allowing for actions like decelerating or adjusting the driving direction to be performed in advance to avoid the risk. Optionally, the intelligent terminal may automatically download the upgrade data package via an application software (APP) when detecting a hardware upgrade availability, and the APP may present an upgrade prompt when the software version upgrade is available. When the user confirms an upgrade operation according to the upgrade prompt, the intelligent terminal downwards the upgrade data package according to the user's upgrade confirmation operation and sends the upgrade data package to the host end. The host may store the upgrade data package on a storage card, and perform the software upgrade using the stored upgrade data package. Optionally, the host may receive various operation instructions according to user operations performed on the intelligent terminal. For example, the user may send instructions through the intelligent terminal to control the host to take a picture instantly or record a multispectral real-time video of a specified duration. Upon receiving such an instant capturing instruction from the user, the host may interrupt the routine acquisition and display processes of the dual-light image data that are currently performed, perform photographing or video recording according to the capturing instruction and then send the resulting data to the intelligent terminal in real time for the user to review. After completing the task corresponding to the user's capturing instruction, the host can automatically resume the routine acquisition and display processes of the dual-light image data. Other operation instructions receivable by the host from the intelligent terminal may include host configuration parameters set by the user through the intelligent terminal.

In the above embodiment, by means of the interactive communication between the host and the intelligent terminal, a driving record function can be conveniently achieved by the host, calibrating and setting parameters of the host can be conveniently performed from the intelligent terminal, and software upgrade can be successfully performed from the intelligent terminal, which can significantly improve the personalized user experience and convenience in use.

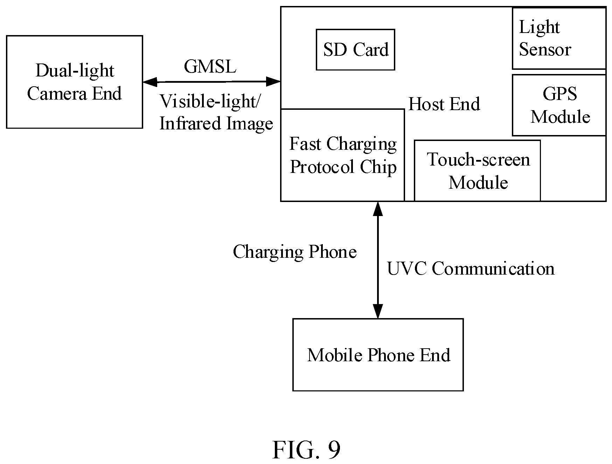

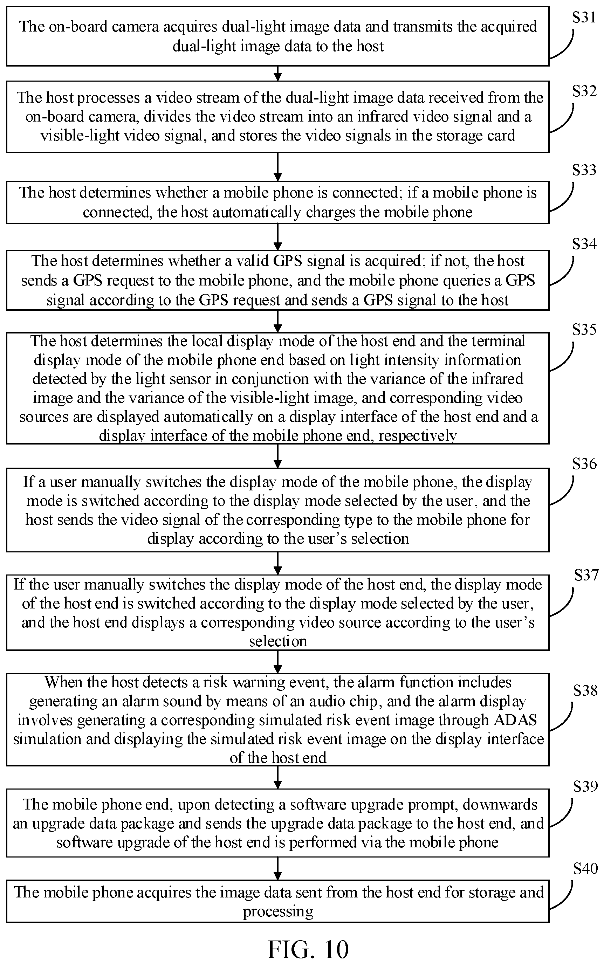

To provide a more comprehensive understanding of the on-board interactive assisted driving method provided by the embodiments of the application, FIGS. 9 and 10 illustrate an example in which the intelligent terminal is illustrated as a mobile phone, the on-board camera is illustrated as a dual-light camera, and implementation units of the on-board interactive assisted driving method includes a dual-light camera end, a host end and a mobile phone end. The dual-light camera end is in communication connection with the host end via a GMSL interface and may send visible-light image data and infrared image data to the host end. The host end includes an SD memory card, a light sensor, a GPS module, a fast charging protocol chip and a touch screen module. The host end automatically charges the mobile phone by means of the fast charging protocol chip while transmitting on-board video data to the mobile phone end via the UVA protocol. The on-board interactive assisted driving method includes the following:
S31, the on-board camera acquires dual-light image data and transmits the acquired dual-light image data to the host, wherein the dual light refers to an infrared light and a visible light, and the on-board camera transmits infrared image data and visible-light image data to the host in a picture-in-picture mode by means of a coaxial cable and the GMSL interface.
S32, the host processes a video stream of the dual-light image data received from the on-board camera, divides the video stream into an infrared video signal and a visible-light video signal, and stores the video signals in the storage card, wherein the host compressively encodes the video signals using H.264 standard, and then automatically saves video data in segmented files on the SD card, with each video segment lasting for 5 minutes.
S33, the host determines whether a mobile phone is connected; if a mobile phone is connected, the host automatically charges the mobile phone.
S34, the host determines whether a valid GPS signal is acquired; if not, the host sends a GPS request to the mobile phone, and the mobile phone queries a GPS signal according to the GPS request and sends a GPS signal to the host.
S35, the host determines the local display mode of the host end and the terminal display mode of the mobile phone end based on light intensity information detected by the light sensor in conjunction with the variance of the infrared image and the variance of the visible-light image, and corresponding video sources are displayed automatically on a display interface of the host end and a display interface of the mobile phone end, respectively.
S36, if a user manually switches the display mode of the mobile phone, the display mode is switched according to the display mode selected by the user, and the host sends the video signal of the corresponding type to the mobile phone for display according to the user's selection.
S37, if the user manually switches the display mode of the host end, the display mode of the host end is switched according to the display mode selected by the user, and the host end displays a corresponding video source according to the user's selection.
S38, when the host detects a risk warning event, the alarm function includes generating an alarm sound by means of an audio chip, and the alarm display involves generating a corresponding simulated risk event image through ADAS simulation and displaying the simulated risk event image on the display interface of the host end.
S39, the mobile phone end, upon detecting a software upgrade prompt, downwards an upgrade data package and sends the upgrade data package to the host end, and software upgrade of the host end is performed via the mobile phone.
S40, the mobile phone acquires the image data sent from the host end for storage and processing.

In the above embodiment, based on the interactive data communication between the host and the mobile phone, UVC video transmission is realized to transmit the acquired dual-light video data to the mobile phone in real time, and the dual-light video data is displayed both on the screen of the mobile phone and the local display screen of the host, thus allowing the user to view the video through either of the small-screen interface of the host and the large screen of the mobile phone. The host may automatically switch the display mode by intelligently determining the environment conditions (daytime, nighttime, weather conditions where the vision of drivers is obstructed), or the display mode can be selected manually according to a user operation. In a case where the host itself has no GPS signal, a GPS signal of the mobile phone is acquired and transmitted to the host. The assisted driving function of the host end can then utilize the mobile phone's GPS signal to determine the speed of the vehicle, enabling alarm functions such as FCW, PCW, LDWD or forward vehicle start alert. The host may charge the mobile phone to replenish its power without affecting data communication and interactive assisted control. For the video stream transmission between the host and the on-board camera, infrared image data and visible-light image data can be transmitted from the on-board camera to the host end in a user-defined picture-in-picture mode, which simplifies hardware of the host and device cabling, thereby enhancing transmission efficiency.

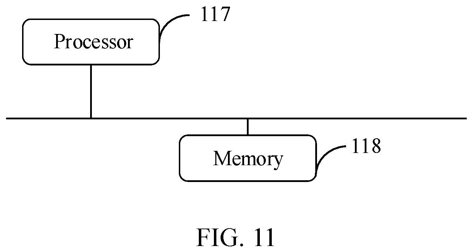

In another aspect, the application provides an on-board electronic device. FIG. 11 shows a schematic diagram of an optional hardware structure of the on-board electronic device according to one embodiment of the application. The on-board electronic device includes a host. The host includes a processor 117, a memory 118 connected to the processor 117, and a computer program stored in the memory 118 and executable by the processor 117. The computer program, when executed by the processor 117, implements the on-board interactive assisted driving method provided by the embodiments of the application and can fulfil the same technical effects, which will not be repeated here.

The host is mounted inside the vehicle. The on-board electronic device further includes an on-board camera in communication connection with the host. The on-board camera is mounted outside the vehicle and configured to acquire dual-light image data in real time and send the dual-light image data to the host. Optionally, a mounting structure for mounting an intelligent terminal is arranged on a housing of the host, or a clamping structure for clamping and fixing the intelligent terminal is arranged on the housing of the host. The intelligent terminal is stably mounted on the host by means of the mounting structure or the clamping structure. When the intelligent terminal is mounted on the host, it can provide a view angle convenient for the user to observe and increase the stability of the intelligent terminal's placement, which enhances the user experience for the interactive assisted driving function where the infrared on-board video and visible-light on-board video are viewed via separate screens.

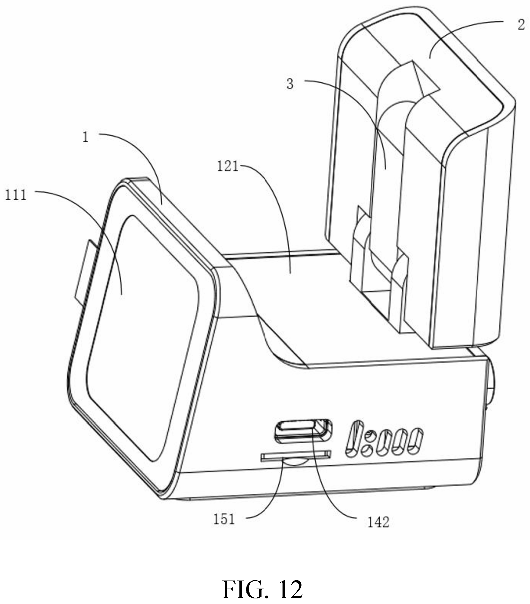

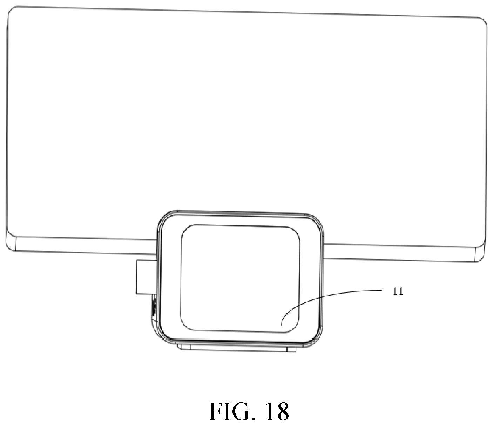

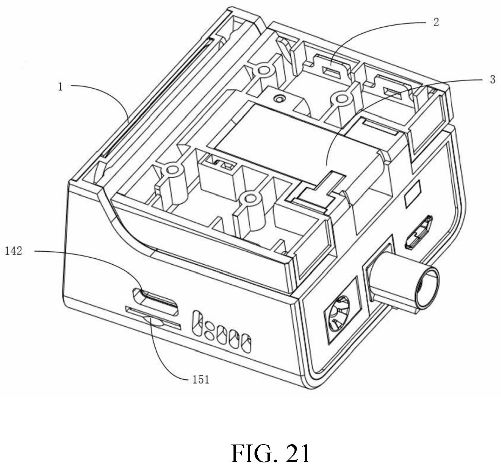

It should be noted that, referring to FIGS. 12-21, an optional specific application example of the on-board electronic device is an on-board assisted driving instrument. It may be understood that in an embodiment where the on-board assisted driving instrument is used as an application example, the function executed by the processor 117 of the host in the on-board electronic device may be correspondingly implemented by a controller 11 of a host main body 1 of the on-board assisted driving instrument. For example, the controller 11 of the host main body 1 of the on-board assisted driving instrument correspondingly executes a computer program to implement the on-board interactive assisted driving method provided by the embodiments of the application.

Referring to FIGS. 12-13, one embodiment of the application provides an on-board assisted driving instrument, including a host main body 1, the host main body 1 having a mounting position for mounting an intelligent terminal device. The host main body 1 includes a controller 11 connected to an on-board camera, a display screen 111 and a charging module 113. The display screen 111 is arranged on one side of the host main body 1. The controller 11 controls the display screen 111 to display an on-board image formed from image data acquired by the on-board camera.

The host main body 1 is in communication connection with the intelligent terminal device to implement data transmission between the host main body 1 and the intelligent terminal device, so as to display the on-board image on the intelligent terminal device. Furthermore, the controller 11 controls the charging module 113 to charge the intelligent terminal device according to a charging demand of the intelligent terminal device. A communication module 112 is arranged in the host main body 1, and the host main body 1 is in communication connection with the intelligent terminal device through the communication module 112. The communication module 112 may be a wired communication module, or a wireless communication module. It should be noted that in the embodiment where the on-board assisted driving instrument is illustrated as the application example, the host main body 1 refers to the same object as the host in the embodiments of the on-board electronic device, the intelligent terminal device refers to the same object as the intelligent terminal in the embodiments of the on-board electronic device, and the on-board image refers to the same object as the on-board video in the embodiments of the on-board electronic device.

In this embodiment, the host main body 1 is in communication connection with the intelligent terminal device. Through data transmission between the host main body 1 and the intelligent terminal device, the host main body 1 can send in real time the on-board image, formed from the image data acquired by the on-board camera, to the intelligent terminal device for display while displaying the on-board image on the local display screen 111. In this way, thanks to the development and popularization of various portable intelligent terminal devices, displaying the on-board video no longer merely relies on the display function of the host main body 1 of the on-board assisted driving instrument. Instead, dual-screen display is provided by utilizing data interaction between the host main body 1 and the intelligent terminal device, such that the on-board assisted driving instrument can display in real time a video data source adaptive to a scenario according to the condition of the scenario. For example, the dual-screen display of the host main body 1 and the intelligent terminal device enables the simultaneous use of an infrared image and a visible-light image in the on-board assisted driving, thus facilitating driver observation, improving driving safety and greatly improving the convenience and practicability of the host end. In addition, the charging module 113 is integrated in the host main body 1. The display function of the intelligent terminal device generally consumes a large amount of power. While the intelligent terminal device and the host main body 1 maintain data interaction for the extended display of the on-board video, the charging module 113 compensates for the power of the intelligent terminal device according to the charging demand of the intelligent terminal device, thus prolonging the endurance of the intelligent terminal device and improving the practicability of the on-board assisted driving instrument.

In one optional embodiment, the host main body 1 includes a circuit board therein, and the controller 11 and the charging module 113 are both arranged on the circuit board. The circuit board is also provided with a power interface, a power supply module electrically connected to the power interface, and a voltage conversion circuit electrically connected to the power supply module. The power supply module is connected to an external on-board power supply module via the power interface to supply power to the circuit board. The voltage conversion circuit converts a voltage input from the on-board power supply module to obtain operating voltages required for the various circuit modules on the circuit board.

The charging module 113 may be a wireless charging module. The wireless charging module includes a wireless transmitter module arranged on the circuit board, for cooperating with a wireless receiver module of the intelligent terminal device. When the intelligent terminal device is placed in the mounting position, the intelligent terminal device is wirelessly charged through the cooperation of the wireless transmitter module and the wireless receiver module. When charging of intelligent terminal device is not needed, a turn-off instruction may be input via an application on the intelligent terminal device or may be input via a corresponding button on a touch display screen of the host main body 1.

The charging module 113 may also be a wired charging module. The wired charging module includes a charging interface arranged on a housing of the host main body 1, for connecting to the intelligent terminal device. The charging interface allows the intelligent terminal device to connect to the charging interface through a data cable, and the charging module 113 provides wired charging to the intelligent terminal device through the charging interface. The type of the charging interface is not specifically limited, which may be a USB interface, a Type-C interface or a Lightning interface. The charging interface is electrically connected to the voltage conversion circuit on the circuit board, and the voltage conversion circuit is connected to the intelligent terminal device via the charging interface to realize wired charging to the intelligent terminal device.

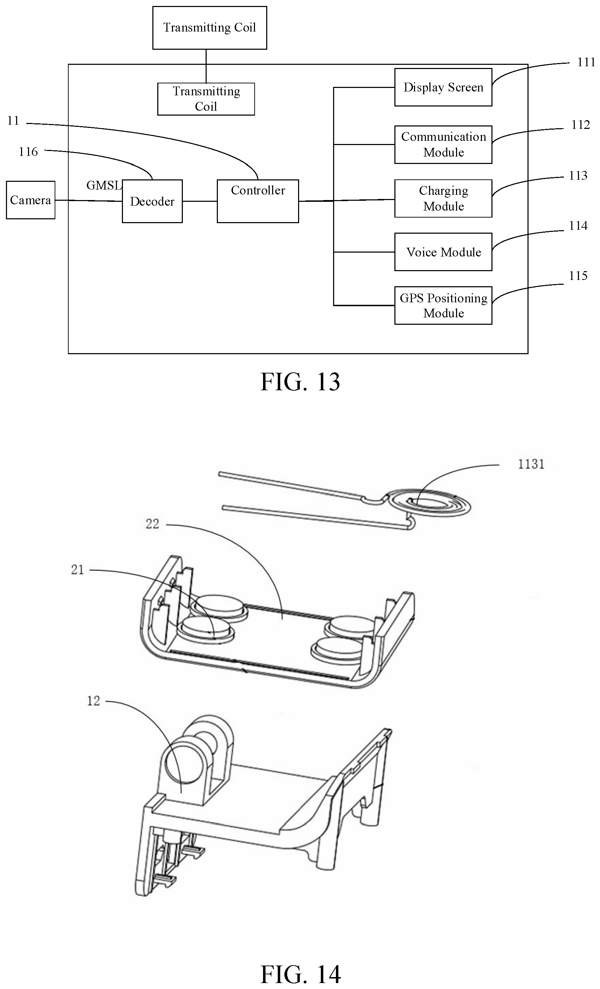

In an optional embodiment, a support member 2 for supporting the intelligent terminal device is arranged on the host main body 1. A magnetic attraction member 21 is arranged on the support member 2, which provides a magnetic force for attracting the intelligent terminal device onto the support member 2. In a case where the charging module 113 is a wireless charging module, the wireless charging module includes a transmitting coil 1131 arranged in the support member 2. The support member 2 includes an upper shell 22 and a lower shell 23 matched with the upper shell 22. Referring to the FIG. 14, the magnetic attraction member 21 may be arranged on an inner surface of the upper shell 22 to improve the overall aesthetics and compactness. Alternatively, the magnetic attraction member 21 may also be arranged on an outer surface of the upper shell 22 to improve the magnetic force between the intelligent terminal device and the support member 2. The magnetic attraction member 21 may include one or more magnets. Illustratively, the magnetic attraction member 21 includes four circular magnets which are distributed at four corners of the support member 2 and arranged on the inner surface of the upper shell 22 at intervals. The upper shell 22 and the lower shell 23 may be connected by snap fit or a threaded connection. In this embodiment, the upper shell 22 and the lower shell 23 are made from ABS plastic, and surfaces of the upper shell 22 and the lower shell 23 undergo painting and brushing finish to improve the aesthetics and abrasion resistance of the support member 2. In this embodiment, the magnetic attraction member 21 not only improves the installation stability of the intelligent terminal device and the support member 2, but it also enables alignment of the intelligent terminal device with the transmitting coil 1131 in the support member 2, thus guaranteeing the charging efficiency of the wireless charging module for charging the intelligent terminal device.

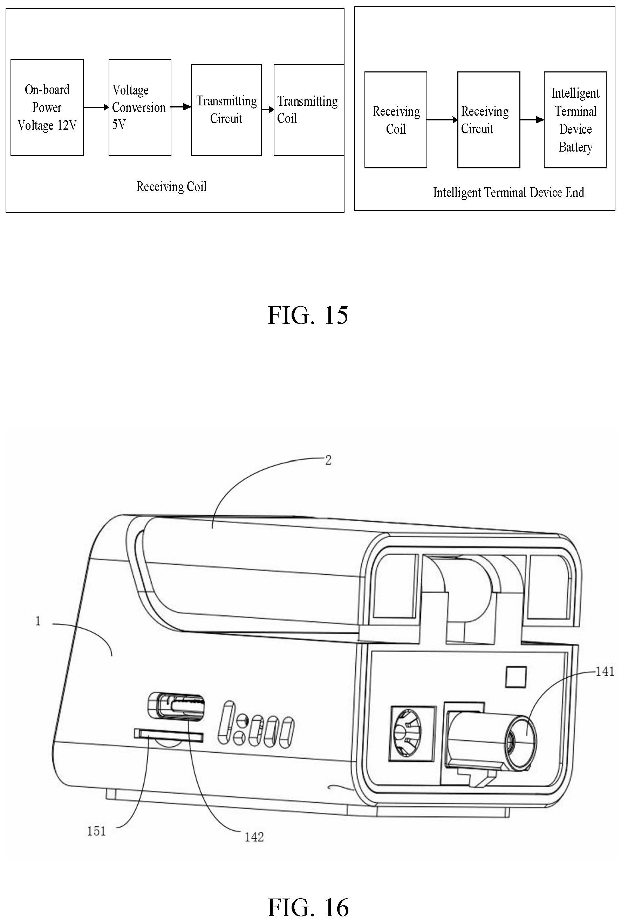

Further, the wireless charging module includes a transmitting circuit arranged on the circuit board and electrically connected to the voltage conversion circuit, and the transmitting coil 1131 arranged in the support member 2 and electrically connected to the transmitting circuit. The transmitting circuit includes a frequency converter configured to convert a direct current into an alternating current, the transmitting coil 1131 receives the alternating current to generate a magnetic field, a receiving coil in the intelligent terminal device receives the magnetic field, which is then converted into a direct current by a rectifying circuit in the intelligent terminal device, thereby realizing wireless charging for the intelligent terminal device. Specifically, as shown in FIG. 15 which illustrates the principle of wireless charging, first, the on-board power supply module outputs a 12V voltage to the circuit board of the host end 1. The voltage conversion circuit on the circuit board converts the 12V voltage into a 5V direct current and transmits the 5V direct current to the transmitting circuit. The frequency converter in the transmitting circuit converts the 5V direct current into an alternating current. The receiving coil 1131 receives the alternating current and generates a magnetic field. The receiving coil of the intelligent terminal device receives the magnetic field, which is then converted into a direct current by the receiving circuit of the intelligent terminal device, thus realizing wireless charging for the intelligent terminal device. In this embodiment, the transmitting circuit and the transmitting coil 1131 are respectively arranged on the circuit board in the host main body 1 and in the support member 2. Therefore, during the wireless charging process of the intelligent terminal device, the contact area between the intelligent terminal device and the support member 2 is much greater than the contact area between the intelligent terminal device and the host main body 1. During the wireless charging process, the circuit board generates heat. By providing the support member 2 to support and position the intelligent terminal device, and by arranging the transmitting coil 1131 within the support member 2, close to a surface of the support member 2 that is in contact with the intelligent terminal device, the present application can avoid the situation where if the transmitting coil 1131 were disposed on the circuit board, the intelligent terminal device would need to maintain very close to the circuit board and thus would be excessively affected by heat generation of the circuit board. In addition, a heat dissipation plate is arranged in the host main body 1, and a plurality of heat-dissipation holes is formed in a housing wall of the host main body 1, for dissipating heat out of the host main body 1, thus providing the assisted driving instrument with effective heat dissipation.

In an optional embodiment, the support member 2 is rotatably connected to the host main body 1 by means of a rotating member 3. A wire channel is formed in the rotating member 3, allowing for a wire connecting the transmitting coil 1131 to the controller 11 of the host main body 1 to pass through the wire channel. By providing the wire channel in the rotating member 3, two lead wire portions of the transmitting coil 1131 can be received in the wire channel, thereby enhancing the overall compactness and aesthetics of the whole device.

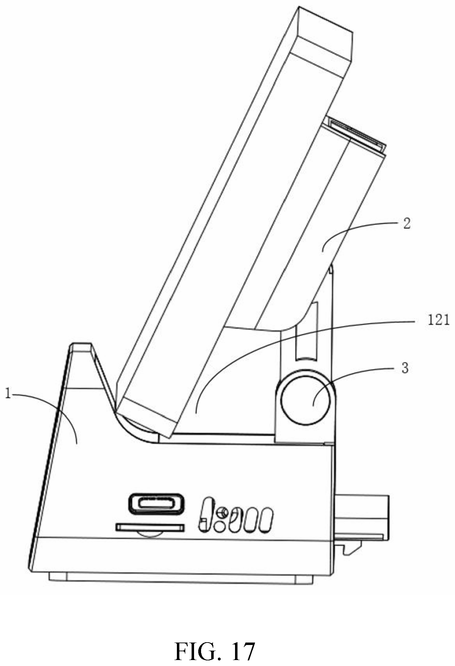

In an optional embodiment, the support member 2 is rotatable with respect to the host main body 1, defining a support state and a stowed state. When the support member 2 rotates with respect to the host main body 1 to the support state, the support member 2 and the host main body 1 collectively form the mounting position for mounting the intelligent terminal device. Referring to FIG. 16, when the support member 2 rotates with respect to the host main body 1 to the stowed state, the support member 2 is folded and stored onto the host main body 1. In this embodiment, the host main body 1 integrates a support function providing the mounting position for stably mounting the intelligent terminal device, and the host main body 1 also has a function of storing the support member 2. This configuration is not only more compact in structure, but it also facilitates providing a mounting posture by the support member 2 in its support state that is more conducive for the user to view the image of the intelligent terminal, thus improving the driving experience of watching an on-board video by means of the dual screens. Referring to FIGS. 17-18, before driving, a user can use his or her intelligent terminal, such as a mobile phone, as an extended display device for the on-board assisted driving instrument. Typically, the support member 2 is initially in the stowed state, and the user may manually rotate the support member 2 with respect to the host main body 1 to switch the support member 2 into the support state. When the intelligent terminal device is not needed, the user can rotate the support member 2 with respect to the host main body 1 to switch the support member 2 back into the stowed state.

In this embodiment, by integrating the support member 2 and the charging module 113 onto the host main body 1 to form the whole assisted driving instrument, and by configuring the support member 2 to be rotatable with respect to the host main body 1 between the support state and the stowed state, the whole assisted driving instrument possesses an assisted driving function while also incorporating a support function and a charging function. During installation, only the whole assisted driving instrument needs to be mounted inside the vehicle, making the installation process simple and easy to implement. In addition, the communication connection between the host main body 1 and the intelligent terminal device enables data transmission therebetween, allowing the on-board image to be displayed on the intelligent terminal device.

The host main body 1, the support member 2 and the rotating member 3 are integrated into a unitary structure, forming the host of the on-board assisted driving instrument. The host may be a portable integrated structure formed by the host main body 1, the support member 2 and the rotating member 3, and can be detachably mounted inside a driver's cab, facilitating the addition of the assisted driving function with doul-screen display to existing vehicles. Alternatively, the host may be pre-integrated in the driver's cab during the vehicle's design phase. The on-board camera is typically arranged outside the vehicle, and a communication connection can be established between the host main body 1 and the on-board camera in a wired or wireless manner. Illustratively, the host main body 1 is in communication connection with the on-board camera by means of a GMSL interface and a coaxial cable. The on-board camera transmits in real time image data acquired by the on-board camera to the host main body 1 in the form of a video stream. A decoder 116 is arranged on the host main body 1, which can decode the image data acquired by the on-board camera. Alternatively, the host main body 1 may be in communication connection with the on-board camera by means of a FAKRA (Fachkreis Automobil) interface and a coaxial cable.

In an optional embodiment, a receiving space is 121 is formed on an upper surface of the host main body 1, and the rotating member 3 is arranged on one side of the receiving space 121. When the support member 2 rotates with respect to the host main body 1 to the support state, the support member 2 rotates out of the receiving space 121 in a direction away from the upper surface of the host main body 1, creating a space for receiving the intelligent terminal device between the support member 2 and the upper surface of the host main body 1. When the intelligent terminal device is placed in the space, one end of the intelligent terminal device abuts against an inner side of the support member 2, and the other end of the intelligent terminal device abuts against the upper surface of the host main body 1. When the support member 2 rotates with respect to the host main body 1 to the stowed state, the support member 2 is received in the receiving space 121. The receiving space 121 may be formed by a recess on the upper surface of the host main body 1 or may be directly formed on the upper surface of the host main body 1. In addition, a stop block may be arranged at a front end of the receiving space 121, and/or an anti-slip pad or a limiting groove may be arranged on the upper surface of the host main body 1 to prevent the intelligent terminal device form falling off in use. When the support member 2 rotates with respect to the host main body 1 to the stowed state, the support member 2 is received in the receiving space 121. In this embodiment, because the receiving space 121 is formed by a recess of the upper surface of the host, the recessed space for receiving the intelligent terminal device is formed between the support member and the upper surface of the host main body 1 when the support member 2 is in the support state, making the intelligent terminal device less prone to falling off in the vehicle driving process. When the support member is in the stowed state, the support member 2 is received in the receiving space 121 formed by the recess of the upper surface of the host main body 1, thus improving the overall aesthetics.

The rotating member 3 is connected to an outer surface of the lower shell 23 of the support member 2. The lower shell 23 recesses toward the upper shell 22, at a position corresponding to the rotating member 3, to form a storage space. When the support member 2 rotates with respect to the host main body 1 to the stowed state, the rotating member 3 is stored in the storage space. By means of the storage space, the rotating member 3 can be prevented from interfering with the support member 2 during rotation, and the overall size of the support member 2 in the stowed state can be reduced.

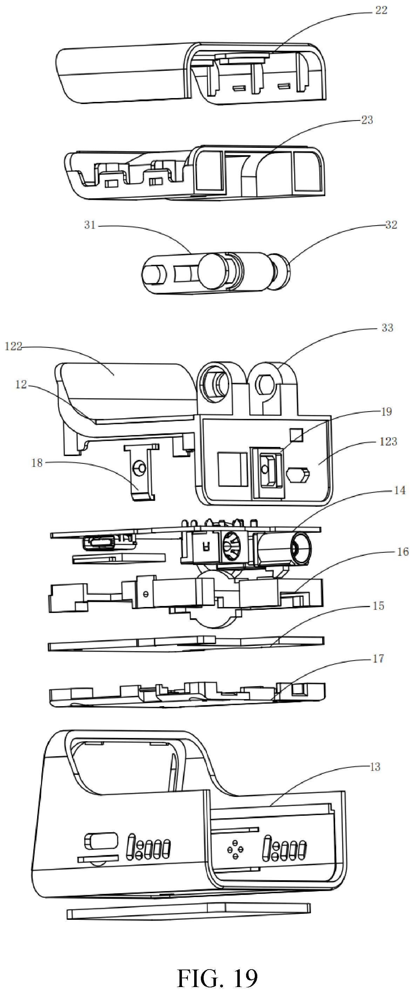

Referring to FIG. 19, in an optional embodiment, the host main body 1 includes a lower housing 13 and an upper housing 12 which are arranged opposite to each other, and the lower housing 13 and the upper housing 12 are assembled together to form an internal space of the host main body 1. One side of a top surface of the upper housing 12 close to the display screen is bent upwards to form a stop surface 122, an opposite side of the top surface of the upper housing 12 is bent downwards to form a mounting surface 123 provided with a plurality of interfaces, and the stop surface 122 is configured to limit and stop the intelligent terminal device placed in the mounting position. Optionally, the rotating member 3 is arranged on an edge, close to the mounting surface 123, of the upper housing 12, and the support member 2 matches the top surface of the upper housing 12 in size and shape. The host main body 1 and the support member 2 are generally made from the same material. In this embodiment, the upper housing 12 and the lower housing 13 are both made from ABS plastic, and the surfaces of the upper housing 12 and the lower housing 13 undergo painting and brushing finish.

In an optional embodiment, the rotating member 3 includes a rotating arm 31 fixedly connected to the support member 2, a central shaft 32 fixedly connected to the rotating arm 31, and a mounting base 33 for mounting the central shaft 32. The mounting base 33 is arranged on a side, away from the display screen 11, of the upper surface of the host main body 1, and the central shaft 32 is movably connected to the mounting base 33 and is rotatable with respect to the mounting base 33. The mounting base 33 includes two mounting brackets which are arranged in parallel, and the central shaft 32 extends through and between the two mounting brackets. Specifically, a first through hole and a second through hole are formed in two ends of the rotating arm 31, respectively. The central shaft 32 extends through the first through hole to connect the rotating arm 31 and the central shaft 32. A connecting piece connected to the lower shell 23 of the support member 2 extends through the second through hole. The connecting piece may be a bolt, which is easy to install and replace. In this embodiment, the mounting base 33 is arranged on the side, away from the display screen 11, of the upper surface of the host main body 1, such that when the support member 2 rotates with respect to the host main body 1 to the support state, the inner side of the support member 2 and the display screen 11 both face the user. In this way, when the intelligent terminal device leans against the inner side of the support member 2, the intelligent terminal device and the display screen 11 are basically oriented in the same direction, both towards the user, thus facilitating user's observation in the driving process.

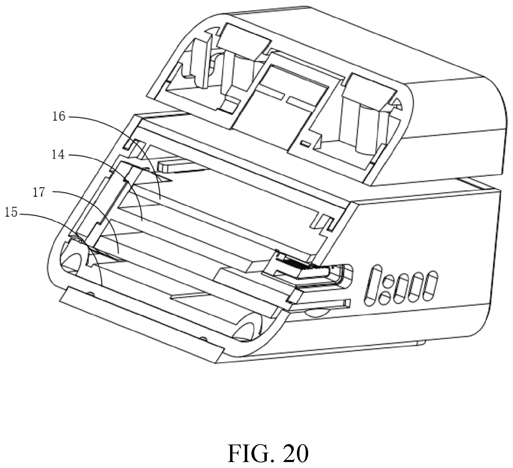

Referring to FIGS. 20-21, in an optional embodiment, the circuit board includes a first printed circuit board (PCB) 14 and a second PCB 15 which are arranged in the host main body 1. The first PCB 14 is provided with a first interface 141 for connecting to the external on-board camera, and a second interface 142 for establishing communication connection with an intelligent terminal device to implement data transmission or wired charging. The first interface 141 may be a FAKRA interface, and the second interface 142 may be a data transmission Type-C interface. Specifically, the external on-board camera is in communication connection with the controller 11 by means of the FAKRA interface, and the intelligent terminal device is in communication connection with the controller by means of the data transmission Type-C interface. The first PCB 14 may be further provided with a GPS positioning module 115. The second PCB 15 is provided with a data storage card slot 151 and a third interface for data export and transmission. The third interface may be a Mini-USB interface. The data storage card slot 1151 allows for insertion of a storage card to enable real-time image recording to fulfil a driving record function or to implement a firmware upgrade. The data storage card slot 151 may be a TF card slot.

In one optional embodiment, a first support plate 16 and a second support plate 17 are arranged at intervals inside the host main body 1. The first PCB 14 and the second PCB 15 are respectively disposed on the first support plate 16 and the second support plate 17. A fixed side plate 18 is arranged between the first support plate 16 and the second support plate 17, and the fixed side plate 18 is fastened to the first support plate 16 and the second support plate 17. Specifically, the first PCB 14 is arranged above the first support plate 16, the first support plate 16 is arranged above the second support plate 17, and the second PCB 15 is arranged between the first support plate 16 and the second support plate 17. Further, the fixed side plate 18 is configured as a T-shaped structure, a bottom of the fixed side plate 18 is fastened to the second support plate 17 by snap-fit, a middle-upper portion of the fixed side plate 18 is fastened to the first support plate 16 using a bolt, and an upper surface of the fixed side plate 18 abuts against the first PCB 14. Optionally, surfaces of the first support plate 16 and the second support plate 17 undergo mirror polishing to reduce the roughness of the surfaces in contact with the PCBs. After undergoing the mirror polishing, the surfaces of the first support plate 16 and the second support plate 17 are coated with insulating paint to avoid short circuits of the PCBs.

In one optional embodiment, a rubber pad 19 is arranged at a connection joint between the first interface 141 and the housing of the host main body 1. The provision of the rubber pad 19 facilitates the connection between the first interface 141 and the on-board camera and fulfils a buffer and shock-absorption effect. In a specific example, the rubber pad 19 is made from a rubber material with a hardness of 50.

In one optional embodiment, the host main body 1 includes a voice module 114. The voice module 114 is connected to the controller 11 and configured to output an alarm signal. The voice module 114 outputs an alarm signal according to information fed back from the controller 11. The voice module 114 may be a speaker or a buzzer.

Further, the host main body 1 includes the GPS positioning module 115, and the GPS positioning module 115 is configured to acquire real-time speed/position information of a vehicle and send the real-time speed/position information to the controller 11.

In an optional embodiment, the controller 11 is in communication with an on-board dual-light camera provided with a dual-light core module. The controller 11 generates on-board images of different types according to visible-light image data and infrared image data acquired by the on-board dual-light camera, the types of the on-board images at least including an infrared on-board image and a visible-light on-board image. The host main body 1 displays the on-board video of a first target type, the intelligent terminal device displays the on-board image of a second target type, and the first target type and the second target type are the same or different. Here, it should be noted that first target type of the on-board image displayed by the host main body 1 and the second target type of the on-board image displayed by the intelligent terminal device may be determined by the controller 11 implementing the on-board interactive assisted driving method according to the embodiments of the present application. That is, the target-type video source is the second target type.

The on-board dual-light camera may be an integrated unit combining a visible-light camera and an infrared camera, which can synchronously acquire an infrared signal and a visible-light signal from the driving scenario of the vehicle, and obtain corresponding visible-light image data and infrared image data by means of photoelectric conversion and imaging processing. In the on-board assisted driving instrument, a communication connection is established between the host main body 1 and the intelligent terminal device, and double-screen display is provided by utilizing data interaction between the host main body 1 and the intelligent terminal. An infrared on-board image and a visible-light on-board image are respectively formed based on the infrared image data and the visible-light image data acquired by the on-board dual-light camera. As such, the infrared on-board image can be displayed by one of the display screen 111 of the host main body 1 and the intelligent terminal, while the visible-light on-board image can be synchronously displayed by the other one of the display screen 111 of the host main body 1 and the intelligent terminal. The first target type and the second target type may be set by default. For example, by default, the first target type of the on-board image displayed by the host main body 1 is set as the infrared on-board image, and the second target type of the on-board image displayed by the intelligent terminal device is set as the visible-light on-board image. It should be noted that the display screen 111 of the host main body 1 often has a fixed size. Establishing a communication connection between the host main body 1 and the intelligent terminal device to provide doul-screen display can also serve the purpose of utilizing the intelligent terminal device to provide a larger-sized display for the on-board image. The first target type of the on-board image displayed on the display screen 111 of the host main body 1 and the second target type of the on-board image displayed by the intelligent terminal device can be manually selected by users, so as to synchronously display the on-board image of the same type.

It should be further noted that a corrugated plate with multiple grooves may be mounted on the upper surface of the host main body 1, and the intelligent terminal device can be placed upright within a selected one of the grooves of the corrugated plate. The intelligent terminal device may be placed in different grooves as needed to adjust an angle of the intelligent terminal device, facilitating the driver viewing image information displayed on the intelligent terminal device. Optionally, an adhesive layer (e.g. a 3M adhesive layer) may be arranged on a lower surface of the host main body 1, for fixing the on-board assisted driving instrument inside the vehicle.

In one optional embodiment, a light sensor is provided in the host main body 1. A window is arranged on the housing of the host main body 1 at a position corresponding to the light sensor. The light sensor senses a light intensity signal and sends the light intensity signal to the controller 11, and the controller 11 controls the display screen 111 of the host main body to correspondingly display a white-light on-board image or an infrared on-board image according to the light intensity signal. The host main body 1 may acquire in real time light intensity information of the current environment through the light sensor, determine whether the current light is sufficient or insufficient, and adaptively control the switching of the type of the on-board image displayed on the host main body 1 and the type of the on-board image displayed on the intelligent terminal.

An embodiment of the application further provides a computer-readable storage medium with a computer program stored thereon. The computer program, when executed by a processor, implements the processes of the embodiments of the on-board interactive assisted driving method and fulfils the same technical effects, which will not be repeated here. The computer-readable storage medium may be, for example, a Read-Only Memory (ROM), a Random Access Memory (RAM), a magnetic disk, an optical disc, or the like.

It should be noted that the term "include" or "comprise" or any other variants thereof are intended to indicate non-exclusive inclusion, such that a process, method, article or device comprising a list of elements not only includes elements that are listed, but also includes other elements that are not explicitly listed or elements inherent to the process, method, article or device. Unless otherwise specifically stated, an element defined by "comprise a/an" does not exclude the presence of additional identical elements in the process, method, article or device comprising said element.

Through the description of the above embodiments, those skilled in the art may clearly understand that the method in the above embodiments may be implemented by software in combination with a necessary general hardware platform, and may also be implemented by hardware, and the former is preferred in most cases. Based on such an understanding, the technical solutions of the invention or the part of the technical solutions that contributes to the prior art may be embodied in the form of a software product. The computer software product may be stored in a storage medium (such as an ROM/RAM, magnetic disk, or an optical disc), including a plurality of instructions for enabling a terminal (such as a mobile phone, a computer, or an infrared imaging device) to implement the method in the embodiments of the invention.

The above embodiments are merely specific ones of the invention, and the protection scope of the invention is not limited to the above embodiments. Any modifications or substitutions easily obtained by any skilled in the art within the technical scope disclosed by the invention shall fall within the protection scope of the invention. Therefore, the protection scope of the invention shall be defined by the claims.

## Claims

1. An on-board interactive assisted driving method for use in an on-board electronic device, comprising:
obtaining dual-light image data acquired by an on-board camera, wherein the dual-light image data comprises infrared image data and visible-light image data;
determining a local display mode of a host end, and on the basis of the dual-light image data, displaying a target-type on-board video corresponding to the local display mode on a display interface of the host end; and
after a communication connection with an intelligent terminal is established, determining a terminal display mode of the intelligent terminal, obtaining, on the basis of the dual-light image data, a target-type video source corresponding to the terminal display mode, and sending the target-type video source to the intelligent terminal for display.

2. The on-board interactive assisted driving method according to claim 1, wherein obtaining dual-light image data acquired by an on-board camera comprises:
selecting, according to a size of the infrared image data, an available image region of the same size from the visible-light image data as a target region, and superimposing the infrared image data onto the target region of the visible-light image data to form dual-light image data in a picture-in-picture mode; and
obtaining the dual-light image data from the on-board camera.

3. The on-board interactive assisted driving method according to claim 2, wherein selecting, according to a size of the infrared image data, an available image region of the same size from the visible-light image data as a target region comprises:
according to the size of the infrared image data, taking an image region, corresponding to a sky in a driving scenario, in the visible-light image data as the available image region, and selecting a region, a size of which is the same as the size of the infrared image data, as the target region, or selecting multiple regions, a total size of which is the same as the size of the infrared image data, as the target region.

4. The on-board interactive assisted driving method according to claim 2, wherein obtaining dual-light image data acquired by an on-board camera further comprises:
processing the dual-light image data in the picture-in-picture mode to divide the dual-light image data in the picture-in-picture mode into an infrared video signal and a visible-light video signal, and compressively encoding and storing the video signals;
sending the target-type video source to the intelligent terminal for display comprises:
if the terminal display mode is an infrared mode, sending the infrared video signal to the intelligent terminal for display through a wired communication or a wireless communication with the intelligent terminal; or
if the terminal display mode is a visible-light mode, sending the visible-light video signal to the intelligent terminal for display through a wired communication or a wireless communication with the intelligent terminal.

5. The on-board interactive assisted driving method according to claim 1, further comprising:
after the communication connection with the intelligent terminal is established, masquerading an identity of the host end as a master device and masquerading the intelligent terminal as a slave device by means of a fast charging protocol, and charging the intelligent terminal according to a charging demand of the intelligent terminal.

6. The on-board interactive assisted driving method according to claim 1, further comprising:
in a case where a GPS signal of the host end does not satisfy requirements, determining whether the communication connection with the intelligent terminal is established currently;
if the communication connection with the intelligent terminal is established currently, sending a GPS signal request to the intelligent terminal, receiving GPS data returned by the intelligent terminal, and enabling a speed warning mechanism based on the received GPS data; or,
if the communication connection with the intelligent terminal is not established currently or a GPS signal of the intelligent terminal is invalid, disabling the speed warning mechanism.

7. The on-board interactive assisted driving method according to claim 1, wherein determining a local display mode of a host end comprises:
determining the local display mode according to default settings of the host end; and/or, determining the local display mode by adaptive adjustment on the basis of real-time light intensity information and image information; and/or, determining the local display mode based on a mode selection operation performed on the host end; wherein the local display mode is an infrared mode, a visible-light mode or a simulation display mode;
determining a terminal display mode of the intelligent terminal comprises:
determining the terminal display mode according to default settings of the intelligent terminal; and/or, determining the terminal display mode by adaptive adjustment on the basis of real-time light intensity information and image information; and/or, determining the terminal display mode based on a mode selection operation performed on the intelligent terminal; wherein the terminal display mode is an infrared mode or a visible-light mode.

8. The on-board interactive assisted driving method according to claim 1, wherein determining a local display mode of a host end comprises:
maintaining the local display mode of the host end as a simulation display mode;
determining a terminal display mode of the intelligent terminal comprises:
acquiring real-time light intensity information, and determining whether a sufficient light condition is satisfied according to whether the light intensity information is greater than a threshold;
if the sufficient light condition is satisfied, comparing a variance of the infrared image data with a Y-component variance of the visible-light image data;
if the variance of the infrared image data is less than the Y-component variance of the visible-light image data, determining the terminal display mode of the intelligent terminal as a visible-light mode; or,
if the sufficient light condition is not satisfied or the variance of the infrared image data is not less than the Y-component variance of the visible-light image data, determining the terminal display mode of the intelligent terminal as an infrared mode.

9. The on-board interactive assisted driving method according to claim 1, further comprising:
performing image analysis on the basis of the dual-light image data, and issuing warning information in the presence of a risk warning event, wherein the warning information comprises a warning sound or a simulated risk event image displayed on the display interface of the host end that corresponds to the risk warning event; and/or
after the communication connection with the intelligent terminal is established, receiving an upgrade data package issued by the intelligent terminal following an upgrade prompt, and performing a firmware upgrade using the upgrade data package; and/or
receiving a capturing instruction issued by the intelligent terminal, capturing an image or recording a video of a set duration by means of the on-board camera according to the capturing instruction, and sending the image or the video to the intelligent terminal for real-time display.

10. An on-board electronic device, comprising a host (1), wherein the host (1) comprises a processor (117), a memory (118) connected to the processor (117) and a computer program stored in the memory (118) and executable by the processor (117); and the computer program, when executed by the processor (117), implements the on-board interactive assisted driving method according to any one of claims 1 to 9.

11. The on-board electronic device according to claim 10, wherein the host (1) is mounted inside a vehicle, the on-board electronic device further comprises an on-board camera in communication connection with the host (1), and the on-board camera is mounted outside the vehicle and configured to acquire dual-light image data in real time and send the dual-light image data to the host (1); and a mounting structure for mounting an intelligent terminal is arranged on a housing of the host (1), or a clamping structure for clamping and fixing the intelligent terminal is arranged on the housing of the host (1).

12. The on-board electronic device according to claim 10, wherein a mounting position for mounting an intelligent terminal is arranged on the host (1);
wherein the host (1) further comprises an on-board camera, a display screen (111) and a charging module (113), the display screen (111) is arranged on a side of the host (1), and the processor (117) controls the display screen (111) to display an on-board video formed from image data acquired by the on-board camera;
wherein the host (1) is configured to be in communication connection with the intelligent terminal to implement data transmission between the host (1) and the intelligent terminal, so as to enable display of the on-board video on the intelligent terminal, and the processor (117) is configured to control the charging module (113) to charge the intelligent terminal according to a charging demand of the intelligent terminal.

13. The on-board electronic device according to claim 12, wherein a circuit board is mounted in the host (1), the processor (117) and the charging module (113) are both arranged on the circuit board, and the circuit board is configured to connect to an on-board power supply module for the circuit board to be powered by the on-board power supply module;
the charging module (113) is a wireless charging module, and the wireless charging module comprises a wireless transmitter module arranged on the circuit board and configured to cooperate with a wireless receiver module in the intelligent terminal; when the intelligent terminal is placed in the mounting position, the wireless transmitter module cooperates with the wireless receiver module to wirelessly charge the intelligent terminal; or, the charging module (113) is a wired charging module, the wired charging module comprises a charging interface arranged on a housing of the host (1) and configured to connect with the intelligent terminal, the charging interface allowing the intelligent terminal to connect to the charging interface via a data cable, and the charging module (113) is configured to charge the intelligent terminal in a wired manner through the charging interface.

14. The on-board electronic device according to claim 12, wherein a support member (2) for supporting the intelligent terminal is arranged on the host (1), a magnetic attraction member (21) is arranged on the support member (2), and the magnetic attraction member (21) provides a magnetic force for attracting the intelligent terminal onto the support member (2).

15. The on-board electronic device according to claim 14, wherein the charging module (113) is a wireless charging module, and the wireless charging module comprises a transmitting coil (1131) arranged in the support member (2) and configured to be wirelessly connected to a receiving coil in the intelligent terminal to realize wireless charging of the intelligent terminal.

16. The on-board electronic device according to claim 15, wherein the support member (2) is rotatably connected to the host (1) by means of a rotating member (3), and a wire channel is formed in the rotating member (3), allowing for a wire connecting the transmitting coil (1131) to the processor (117) of the host (1) to pass through the wire channel.

17. The on-board electronic device according to claim 14, wherein the support member (2) is rotatable with respect to the host (1), defining a support state and a stowed state;
when the support member (2) rotates with respect to the host (1) to the support state, the support member (2) and the host (1) collectively form the mounting position for mounting the intelligent terminal; when the support member (2) rotates with respect to the host (1) to the stowed state, the support member (2) is folded and stored onto the host (1).

18. The on-board electronic device according to claim 12, wherein the host (1) comprises a voice module (114), and the voice module (114) is connected to the processor (117) and configured to output an alarm signal.

19. The on-board electronic device according to claim 12, wherein the host (1) comprises a GPS positioning module (115), the GPS positioning module (115) configured to acquire real-time speed and/or position information of a vehicle and send the real-time speed and/or position information of the vehicle to the processor (117).

20. The on-board electronic device according to claim 12, wherein the processor (117) is in communication connection with an on-board dual-light camera provided with a dual-light core module, the processor (117) is configured to generate on-board videos of different types according to visible-light image data and infrared image data acquired by the on-board dual-light camera, and the types of the on-board videos at least comprise an infrared on-board image and a visible-light on-board image;
the display screen (111) of the host (1) displays the on-board video of a first target type, the intelligent terminal displays the on-board video of a second target type, and the first target type and the second target type are the same or different.

21. The on-board electronic device according to claim 12, wherein the host (1) is in communication connection with the on-board camera by means of a GMSL interface and a coaxial cable.

22. A computer-readable storage medium, **characterized in that**, the computer-readable storage medium stores a computer program thereon, wherein the computer program, when executed by a processor, implements the on-board interactive assisted driving method according to any one of claims 1 to 9.

23. An on-board electronic device, comprising a host main body (1) and a mounting position arranged on the host main body (1) for mounting an intelligent terminal device;
wherein the host main body (1) comprises a controller (11) connected to an on-board camera, a display screen (111) and a charging module (113), the display screen (111) is arranged on a side of the host main body (1), and the controller (11) is configured to control the display screen (111) to display an on-board image formed from image data acquired by the on-board camera;
wherein the host main body (1) is configured to be in communication connection with the intelligent terminal device to implement data transmission between the host main body (1) and the intelligent terminal device, so as to enable display of the on-board image on the intelligent terminal device, and the controller (11) is configured to control the charging module (113) to charge the intelligent terminal device according to a charging demand of the intelligent terminal device;
wherein the on-board camera is an on-board dual-light camera provided with a dual-light core module, the controller (11) is in communication connection with the on-board dual-light camera and configured to generate on-board images of different types according to visible-light image data and infrared image data acquired by the on-board dual-light camera, and the types of the on-board images at least comprise an infrared on-board image and a visible-light on-board image; and the display screen (111) of the host main body (1) displays the on-board image of a first target type, the intelligent terminal device displays the on-board image of a second target type, and the first target type and the second target type are the same or different.

24. The on-board electronic device according to claim 23, wherein a circuit board is arranged in the host main body (1), the controller (11) and the charging module (113) are both arranged on the circuit board, and the circuit board is configured to connect to an on-board power supply module for the circuit board to be powered by the on-board power supply module;
the charging module (113) is a wireless charging module, and the wireless charging module comprises a wireless transmitter module arranged on the circuit board and configured to cooperate with a wireless receiver module in the intelligent terminal device; when the intelligent terminal device is placed in the mounting position, the wireless transmitter module cooperates with the wireless receiving module to wirelessly charge the intelligent terminal device; or, the charging module (113) is a wired charging module, the wired charging module comprises a charging interface arranged on a housing of the host main body (1) and configured to connect to the intelligent terminal device, the charging interface allowing the intelligent terminal device to be connected to the charging interface via a data cable, and the charging module (113) is configured to charge the intelligent terminal device in a wired manner through the charging interface.

25. The on-board electronic device according to claim 23, wherein a support member (2) for supporting the intelligent terminal device is arranged on the host main body (1), a magnetic attraction member (21) is arranged on the support member (2), and the magnetic attraction member (21) provides a magnetic force for attracting the intelligent terminal device onto the support member (2).

26. The on-board electronic device according to claim 25, wherein the charging module (113) is a wireless charging module, the wireless charging module comprises a transmitting coil (1131) arranged in the support member (2) and configured to be wirelessly connected to a receiving coil in the intelligent terminal device to realize wireless charging of the intelligent terminal device.

27. The on-board electronic device according to claim 26, wherein the support member (2) is rotatably connected to the host main body (1) by means of a rotating member (3), a wire channel is formed in the rotating member (3), allowing for a wire connecting the transmitting coil (1131) to the controller (11) of the host main body (1) to pass through the wire channel.

28. The on-board electronic device according to claim 26, wherein the support member (2) is rotatable with respect to the host main body (1), defining a support state or a stowed state;
wherein when the support member (2) rotates with respect to the host main body (1) to the support state, the support member (2) and the host main body (1) collectively form the mounting position for mounting the intelligent terminal device; when the support member (2) rotates with respect to the host main body (1) to the stowed state, the support member (2) is folded and stored onto the host main body (1).

29. The on-board electronic device according to claim 23, wherein the host main body (1) comprises a voice module (114), and the voice module (114) is connected to the controller (11) and configured to output an alarm signal.

30. The on-board electronic device according to claim 23, wherein the host main body (1) comprises a GPS positioning module (115) and configured to acquire real-time speed and/or position information of a vehicle and send the real-time speed and/or position information of the vehicle to the controller (11).

31. The on-board electronic device according to claim 23, wherein the host main body (1) is in communication connection with the on-board camera by means of a GMSL interface and a coaxial cable.
